(19) Europäisches Patentamt
European Patent Office
Office européen des brevets

(11) EP 3 535 227 B1

(12) **FASCICULE DE BREVET EUROPEEN**

(45) Date de publication et mention de la délivrance du brevet:
**14.07.2021 Bulletin 2021/28**

(21) Numéro de dépôt: **17800909.8**

(22) Date de dépôt: **02.11.2017**

(51) Int Cl.:
***C04B 28/10*** *(2006.01)* ***C04B 40/06*** *(2006.01)*
***C04B 111/00*** *(2006.01)* ***C04B 111/28*** *(2006.01)*
***C04B 111/52*** *(2006.01)*

(86) Numéro de dépôt international:
**PCT/FR2017/053006**

(87) Numéro de publication internationale:
**WO 2018/083420 (11.05.2018 Gazette 2018/19)**

# (54) COMPOSITION DE CONSTRUCTION SECHE PROJETABLE EN VOIE HUMIDE A L'AIDE D'UNE POMPE A VIS ET COMPRENANT UN LIANT ET UNE CHARGE BIOSOURCEE - PREPARATION ET APPLICATIONS D'UNE TELLE COMPOSITION

TROCKENBAUZUSAMMENSETZUNG, DIE MITHILFE EINER SCHNECKENPUMPE NASS AUFGESPRITZT WERDEN KANN, MIT EINEM BINDEMITTEL UND EINEM BIOBASIERTEN FÜLLSTOFF - HERSTELLUNG UND VERWENDUNGEN SOLCH EINER ZUSAMMENSETZUNG

DRY CONSTRUCTION COMPOSITION WHICH CAN BE WET-SPRAYED BY MEANS OF A SCREW PUMP AND COMPRISING A BINDER AND A BIO-BASED FILLER - PREPARATION AND USES OF SUCH A COMPOSITION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.11.2016 FR 1660651**

(43) Date de publication de la demande:
**11.09.2019 Bulletin 2019/37**

(73) Titulaire: **Sika Technology AG**
**6340 Baar (CH)**

(72) Inventeurs:
- **CAPPELLARI, Marco**
  **38070 Saint Quentin Fallavier (FR)**
- **DESROSES, Lisa**
  **38070 Saint Quentin Fallavier (FR)**
- **DAUBRESSE, Anne**
  **38070 Saint Quentin Fallavier (FR)**

(74) Mandataire: **Sika Patent Attorneys**
**c/o Sika Technology AG**
**Corp. IP Dept.**
**Tüffenwies 16**
**Postfach**
**8048 Zürich (CH)**

(56) Documents cités:
**EP-A1- 3 031 868** **WO-A1-2015/082515**
**WO-A1-2016/051085** **DE-A1- 19 505 989**
**DE-A1- 19 610 247** **FR-A- 384 903**
**FR-A1- 2 923 242** **FR-A1- 2 957 016**
**FR-A1- 3 016 377** **FR-A1- 3 034 415**
**US-A- 2 083 961**

- **CAMILLE MAGNIONT ET AL: "Use of plant aggregates in building ecomaterials", EUROPEAN JOURNAL OF ENVIRONMENTAL AND CIVIL ENGINEERING, vol. 16, no. sup1, 1 juin 2012 (2012-06-01), pages s17-s33, XP055400536, ISSN: 1964-8189, DOI: 10.1080/19648189.2012.682452**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 535 227 B1

## Description

### Domaine technique

Le domaine technique de l'invention est celui des compositions de construction, sèches, humides, et durcies; utilisables dans le bâtiment; applicables sur des surfaces horizontales par étalement, sur des surfaces verticales par projection et/ou destinées à la production d'objets moulés dans des moules ou des coffrages.

Ces compositions comprennent des granulats et des charges destinés à être agglomérés ou agglomérés par au moins un liant. Classiquement, ces compositions sont des bétons ou des mortiers.

Les liants sont minéraux et/ou organiques et de préférence minéraux.

Les compositions de construction plus spécifiquement visées sont celles qui comprennent en plus et/ou à la place des granulats minéraux, des charges issues de la filière des matériaux biosourcés, c'est-à-dire, issus de la biomasse d'origine végétale ou animale, de préférence végétale.

L'invention a également pour objet une formulation spécifique de liant adaptée à des charges biosourcées, de préférence d'origine végétale.

L'invention vise également les formes humides de ces compositions et leur préparation, ainsi que leurs applications dans le bâtiment.

Les éléments de construction obtenus à partir des susdites compositions font également partie intégrante de l'invention.

### Arrière-plan technologique

Dans le contexte actuel réglementaire et politique de réduction de l'empreinte environnementale des bâtiments, de diminution la consommation de matières premières d'origine fossile, de limitation des émissions de gaz à effet de serre et de promotion de l'économie du développement durable, la mise en œuvre de granulats/charges végétaux biosourcés dans les compositions de construction est en plein essor.

Les matières premières végétales déjà utilisées dans le domaine du bâtiment et de la construction sont notamment : les laines de fibres végétales, les textiles naturels recyclés, les ouates de cellulose, les pailles de chanvre ou chènevottes, les chanvres sous d'autres formes, les anas de lin, la paille sous forme de bottes ou compressée, le bois sous toutes ses formes, etc.

Ces matières premières végétales sont connues pour leurs propriétés isolantes thermiques et acoustiques et pour leurs propriétés de renforts, de charges et de matrices.

L'utilisation de telles matières premières végétales dans les compositions de construction, soulève néanmoins certain nombre de difficultés, parmi lesquelles on peut citer :

- Un caractère très fortement hydrophile et hyper absorbant entraînant un excès d'eau;
- l'excès d'eau qui allonge le séchage et retarde la prise;
- l'excès d'eau qui a un impact sur la résistance mécanique des compositions durcies (eg. résistance à la compression);
- l'excès d'eau qui affecte la durabilité des compositions durcies;
- l'excès d'eau qui favorise le développement de micro-organismes qui dégradent la qualité sanitaire des compositions durcies.

Les granulats/charges végétaux sont en effet généralement caractérisés par une forte capacité d'absorption d'eau liée à leur structure fortement poreuse. La chènevotte, granulat/charge issue de la tige de chanvre, est capable d'absorber une quantité d'eau jusqu'à 3-4 fois son poids. Une fois en contact avec une pâte de liant minéral, les granulats/charges végétaux absorbent une partie de l'eau de gâchage en impactant la cinétique de durcissement du mortier. Ce type de granulats/charges nécessitent des taux d'eau élevés, avec pour conséquence des temps de séchage du mortier isolant longs.

Les inventions objets des demandes de brevet antérieures évoquées ci-après, relèvent des problématiques issues de l'incorporation de matières premières végétales dans les compositions de construction.

La demande de brevet WO03004435 indique que l'incorporation de dérivés du chanvre dans un béton ou mortier pose un problème très sérieux du fait du caractère fortement hydrophile du composant chanvre. Celui-ci peut absorber jusqu'à environ 400 % de son poids d'eau ou de liquide à base aqueuse, ce qui introduit une très forte réaction concurrente avec l'eau contenue dans le mortier ou béton.

La demande de brevet WO03004435A1 se propose de répondre à ce problème sans nuire aux caractéristiques de séchage et de prise des formulations humides, et sans affecter les propriétés mécaniques des produits durcis issus desdites formulations. À cette fin, elle divulgue des formulations pour bétons et mortiers de chanvre, comportant:

- des composants de chanvre (et/ou du lin et/ou de la paille de céréale, comme la cosse d'avoine ou la cosse de riz),
- un liant constitué, en totalité ou en partie, de chaux aérienne;
- au moins un adjuvant de formation de pores et capillaires très fins formant un ensemble de système microcapillaire, pour que l'eau matricielle puisse être évacuée vers la surface lors de la prise puis du séchage tandis que, après séchage, l'eau externe (pluie) n'est pas capable de pénétrer ce réseau de capillaires; (colloïdes végétaux comme les alginates et/ou les polysaccharides et tous dérivés d'amidons naturels ou synthétiques et/ou les carraghénates) ;
- et au moins un adjuvant d'hydrophobation matricielle; (polysulfonates de calcium, de sodium, ou de magnésium, lignosulfonates; sulfates sodiques, savons métalliques, maléates, oléates (Na), stéarates d'aluminium, de magnésium, de sodium, de lithium, siliconates de sodium).

La cinétique de durcissement très lente (supérieure à 24 heures) de ces formulations, ne permet pas de réaliser plusieurs couches d'enduction sur support, dans des temps d'application compatibles avec les exigences de productivité du bâtiment. L'applicateur doit attendre trop longtemps entre chaque couche (passe), à savoir plus d'une journée, ce qui est rédhibitoire, notamment en raison du coût de l'immobilisation des échafaudages.

De plus, ces formulations humides ne sont pas pompables dans une pompe à vis du fait des volumes élevés de chanvre qu'elles contiennent. Or, l'aptitude au pompage ou "pompabilité" dans une pompe à vis est une condition essentielle pour permettre l'application par projection sur des supports (parois, façades, plafonds, planchers..) de ces formulations humides pour bétons et mortiers de chanvre. En effet, la quasi-totalité des machines de projection des applicateurs (façadiers) est équipée d'une pompe à vis. Cela impose aux fabricants de mortiers de proposer des formulations gâchées aptes à passer au travers des pompes à vis usuelles.

Il se trouve que l'emploi de granulats/charges végétaux comme le chanvre dans les formulations selon le WO03004435A1 pose un problème de bourrage/colmatage des pompes à vis, dès lors que ces formulations contiennent des volumes de chanvre suffisamment importants pour garantir une faible conductivité thermique lambda, par exemple inférieure à 0,1 W/m.K, et satisfaire aux performances d'isolation thermiques requises.

Les formulations selon le WO03004435A1 ne répondent pas à ce compromis entre, d'une part, un volume sec suffisant de chanvre par rapport au liant pour obtenir l'isolation thermique requise, et, d'autre part, la pompabilité nécessaire à l'application des formulations humides.

En outre, les produits durcis obtenus à partir de ces formulations humides connues ne présentent pas une bonne "durabilité" aux cycles de vieillissement (norme de l'isolation thermique par l'extérieur EOTA, ETAG004).

La demande de brevet WO2014001712A1 divulgue des matériaux de construction qui sont présentés comme étant aisément préparés à partir d'un granulat végétal et comme ayant d'excellentes propriétés d'isolation thermique et acoustique, mais également un temps de prise, de durcissement et de séchage limitant l'apparition des phénomènes de dégradation dudit matériau généralement observés avec les matériaux de construction préparés à partir d'un granulat végétal. Ces matériaux de construction comprennent :

- 10% à 60 % d'un liant hydraulique et/ou d'un liant aérien (Vicat CNP PM - Ciment Naturel Prompt, éventuellement chaux aérienne) ;
- 16% à 50 % d'un granulat végétal : les poils séminaux des graines, notamment le coton, les fibres libériennes issues des tiges du végétal telles que la fibre de chanvre, la chènevotte, les anas de lin, les copeaux de bois, les billes de lièges ou le miscanthus ; les fibres extraites des feuilles ou du tronc, notamment le sisal ; et les enveloppes de fruits telles que la noix de coco (la fibre de chanvre, la chènevotte, les anas de lin et les copeaux de bois);
- 0,05% à 5% d'un agent rétenteur d'eau par exemple choisi parmi les éthers de cellulose (méthylhydroxyléthylcellulose);
- 10% à 50 %, de préférence 20 à 40% d'eau.
- éventuellement acide citrique
- éventuellement carbonate de sodium

Les matériaux de construction des exemples (bétons) sont mis en œuvre à l'aide d'un malaxeur planétaire puis compactés dans des moules cylindriques. Leur composition et leur mise en œuvre permettent de limiter la quantité d'eau de gâchage : 20 à 40%.

Ces matériaux de construction contiennent de grands volumes de granulats/charges végétaux et ne sont pas pompables, sous forme humide, dans une pompe à vis. D'où il s'ensuit que ces matériaux de construction ne peuvent pas être mis en œuvre par pompage à travers d'une pompe à vis et projection (machine type façadier).

Cette impossibilité de mise en œuvre par pompage à travers une pompe à vis découle également du fait que ces matériaux sont à prise rapide, comme le montrent les exemples du WO2014001712A1, selon lesquels les temps de prise sont inférieurs à 1 heure, ce qui est incompatible avec un passage en machine de projection.

Pour améliorer des compositions de construction dans lesquelles des additions végétales sont incorporées dans une matrice de liant à base de chaux (par exemple le chanvre pour réaliser des blocs comme le Chanvribloc®"), lesdites compositions nécessitant des temps très longs de durcissement, qui retardent la prise des liants hydrauliques, la demande de brevet FR2997944A1 décrit des compositions de béton de chanvre comprenant :

- un liant hydraulique (ciment Portland, Ciment Fondu®, ciment sulfoalumineux, ciment d'aluminate de calcium, chaux hydraulique, chaux aérienne); en particulier ciment Portland, Ciment Fondu®;
- des granulats végétaux formés de chènevotte (chanvre), de rafle de maïs, de sorgho, d'anas de lin, de miscanthus (herbe à éléphant), de balles de riz (cosse de riz), de bagasses de canne, de pailles de céréales, de paille de tournesol, de paille de maïs, de kénaf, de noix de coco, de noyaux d'olive, de bambou, de pellettes de bois (par exemple épicéa déchiqueté), de copeaux de bois et leurs mélanges.
- des cations trivalents (les sels de fer -chlorure ou nitrate de fer- ou les sels d'aluminium);
- un filler calcaire;
- un agent moussant tensioactif,
- éventuellement un accélérateur de prise du liant hydraulique (sels de calcium/de lithium);
- éventuellement un agent réducteur d'eau, un plastifiant ou un superplastifiant;
- et de l'eau; le rapport massique eau / liant étant compris de 0,3 à 2,5.

Ces compositions ne comprennent pas de rétenteur d'eau et présentent une rétention d'eau trop faible, pour permettre une mise en œuvre par pompage à travers une pompe à vis sans entraîner un essorage du matériau humide, qui provoque un blocage/ bourrage de cette pompe à vis. Ces compositions ne sont donc pas pompables avec une pompe à vis et ne sont pas projetables en voie humide. Elles sont destinées à la mise en place par coulage.

On connait par ailleurs les compositions (enduits, mortiers, bétons,..) à caractère isolant commercialisées sous la marque TRADICAL® par la société BCB. Ces compositions comprennent un liant minéral à base de chaux aérienne et une charge de chanvre de marque CHANVRIBAT® 75. Selon les dosages recommandés, ces compositions comportent entre 44 et 165 kg de liant pour 200 litres de chènevotte. Ces compositions peuvent être mises en place par coulage, compactage ou projection en voie sèche ou semi-humide, mais ne peuvent pas être appliquées par projection voie humide avec une pompe à vis. Les compositions de construction à granulats/charges biosourcés selon l'art antérieur évoquées ci-dessus, ne sont pas compatibles avec les procédés d'application en voie humide, qui exigent que la composition humide soit pompable et projetable sur tout type de support vertical, incliné, ou horizontal.

Ces procédés d'application en voie humide garantissent une meilleure homogénéité et répétabilité, tout en minimisant les pertes de granulats/charges par rebond sur la surface de projection. Ils sont notamment couramment utilisés par des applicateurs, dénommés façadiers, pour la réalisation d'enduits de façade, et consistent à pomper et à projeter un mélange homogène composé d'un liant formulé, d'un granulat/charge et de la totalité de l'eau de gâchage. Les machines de projection de façadiers universellement répandues, sont des pompes à vis excentrées ayant une jaquette de pompage type 2L6 ou 2R6 que l'on trouve sur des machines de type S5, SP5, SP11 de Putzmeister, S8, S28R, S38 de Bunker, PH9B ou PH9B-Rde Lancy, Talent DMR de Turbosol. Les dimensions de ces jaquettes rendent difficile le passage de mortiers à caractère isolant, ayant un granulat/charge biosourcé de taille supérieure à 10 mm, par exemple des mortiers dont les granulats/charges sont composés de chènevotte labélisée "chènevotte pour le bâtiment".

Les procédés en voie humide nécessitent une formulation spécifique. En effet, le liant doit permettre le pompage du mortier végétal (par ex. de chanvre) sans séparation de phases (essorage du granulat/charge biosourcé compressé dans la jaquette) et garantir la tenue en charge (éviter le fluage du mortier lors de l'application sur les surfaces verticales) du mortier sur le support.

Il existe par ailleurs des mortiers végétaux à caractère isolant qui sont mis en œuvre, soit manuellement, soit mécaniquement, en utilisant des procédés de pompage-projection spécifiques. Ces procédés dits "voie sèche" et "voie semi-humide" nécessitent des machines spécifiques, parfois coûteuses. Mais ces procédés ne permettent pas de garantir une homogénéité du mortier et un enrobage satisfaisant des fibres végétales, et ont un impact négatif sur sa durabilité aux variations climatiques, et le rendent vulnérable aux micro-organismes, aux rongeurs et au feu. De tels procédés ont été développés principalement pour les mortiers à base de chènevotte afin de réduire la quantité d'eau de gâchage. Selon ces procédés, le granulat/charge végétal est propulsé à sec à la lance de projection, l'enrobage du granulat/charge étant réalisé en sortie ou dans la lance de projection. Les propriétés finales et l'homogénéité du mortier projeté sont fortement impactées par les réglages de la machine, par la distance entre la lance et le mur lors de la projection et par les conditions climatiques. Ces procédés génèrerent des pertes importantes de granulats/charges par rebonds sur le support (environ 10-20%). Ce mode de projection ne garantit pas une reproductibilité optimale pour la réalisation de revêtements de mortier isolant sur des supports verticaux.

C'est le cas de la demande de brevet EP 3031868 qui concerne une composition de revêtement en plâtre comprenant au moins un matériau végétal séché, coupé et/ou haché, et éventuellement laminé, choisi dans le groupe constitué par les tiges, les rafles, les feuilles, les balles et les enveloppes ou tout mélange de ceux-ci, au moins un liant hydraulique, au moins un agent de rétention d'eau et au moins un verre liquide. Ces plâtres sont projetables par la voie semi-humide. Ils ont une faible densité et de bonnes propriétés d'isolation thermique.

Le document EP 3031868 divulgue une composition d'un enduit sec, projetable en voie humide notamment à l'aide d'une pompe à vis, permettant la réalisation d'un enduit isolant (i) qui comprend

A

- 70 - 95 %de poids d'un liant primaire qui comprend au moins un ciment Portland, peut-être en combinaison avec de la chaux;
- 0,01 - 2 %de poids d'un agent rétenteur d'eau (HPMC, HEMC, EMC);
- 0,05 - 5 %de poids silicate de potassium/sodium (considéré comme liant secondaire)
- éventuellement <= 3 %de poids d'autres composants, comme p.e. un dispersant;
- éventuellement des liants latent hydrauliques, pouzzolaniques, et non-hydrauliques.

B

- la paille de colza, rapport masse de la charge biosourcée en kg / de liant A sec en kg étant 15 - 30.

EP 3031868 ne divulgue pas les pourcentages pour le ciment Portland et la chaux et ne considère pas la présence du dispersant dans une proportion de 0,01 - 1 %de poids comme une caractéristique essentielle.

A ce jour et à la connaissance des inventeurs, aucun mortier/béton isolant à base de granulat/charge végétal (matériau biosourcé), ayant une conductivité thermique (λ) inférieure ou égale à 0,2, de préférence à 0,1 W/mK, n'a été développé pour une mise en œuvre par voie humide, en utilisant des machines de projection à pompe à vis, telle que les machines de façadiers.

## Objectifs de l'invention

En l'absence de mortier/béton isolant à base de granulat/charge végétal pompable et projetable par voie humide pour la réalisation d'enduits sur des supports (verticaux, horizontaux ou inclinés) de bâtiments , notamment pour la rénovation thermique des façades, pour la réalisation de chapes isolantes sur des supports horizontaux de bâtiments, pour le remplissage de parois isolantes, notamment dans des maisons ossatures bois, ou bien encore pour la production d'éléments de préfabrication isolants, l'invention vise à satisfaire au moins l'un des objectifs suivants :

- fournir une composition de mortier/béton sec, comprenant des matières premières végétales, projetable en voie humide à l'aide d'une pompe à vis, et permettant la réalisation d'un mortier/béton isolant, d'une faible conductivité thermique (λ);
- fournir une composition de mortier/béton sec, comprenant des matières premières végétales, projetable en voie humide à l'aide d'une pompe à vis, permettant la réalisation d'un mortier/béton isolant, doté d'un durcissement rapide, sans retard de prise, par exemple permettant la "recouvrabilité" de passes de 3 cm toutes les 24 heures (multicouches réalisables dans des délais compatibles avec la productivité requise pour les chantiers dans le domaine du bâtiment) ;
- fournir une composition de mortier/béton sec, comprenant des matières premières végétales, projetables en voie humide à l'aide d'une pompe à vis, permettant la réalisation d'un mortier/béton isolant, et conduisant à des produits durcis présentant des performances mécaniques durables, et ce même dans des conditions météorologiques sévères, par exemple des cycles gel-dégel ou humidité-gel dès les 28 jours suivant l'application;
- fournir une composition de mortier/béton sec, comprenant des matières premières végétales, projetable en voie humide à l'aide d'une pompe à vis, permettant la réalisation d'un mortier/béton isolant, en particulier présentant une vulnérabilité limitée aux dégradations qui trouvent leur cause dans le développement de micro-organismes, dans les agressions des rongeurs ou bien encore dans les incendies;
- fournir une composition de mortier/béton sec, comprenant des matières premières végétales, projetable en voie humide à l'aide d'une pompe à vis, permettant la réalisation d'un mortier/béton isolant, assurant une homogénéité du matériau, aussi bien à l'état humide qu'à l'état sec durci, par un bon enrobage des charges particulaires, de manière à procurer de bonnes performances isolantes sur le plan thermique et sur le plan acoustique;
- fournir une composition de mortier/béton sec, comprenant des matières premières végétales, permettant la réalisation d'un mortier/béton isolant, et projetable en voie humide à l'aide d'une pompe à vis, sans gaspillage de composition du fait des rebonds sur le support;
- fournir une composition de mortier/béton sec, comprenant des matières premières végétales, permettant la réalisation d'un mortier/béton isolant, et projetable en voie humide à l'aide d'une pompe à vis, qui fournisse un dépôt homogène sur le support, et ce de manière répétable;

- fournir une composition de mortier/béton humide, comprenant la composition sèche visée dans les objectifs ci-dessus et de l'eau, projetable en voie humide à l'aide d'une pompe à vis, et satisfaisant à au moins l'un des objectifs ci-dessus;
- fournir un liant destinée à la composition sèche visée dans les objectifs ci-dessus et satisfaisant à au moins l'un des objectifs ci-dessus.
- fournir un kit comprenant le liant et la charge végétale destinés à préparer la composition sèche visée dans les objectifs ci-dessus et satisfaisant à au moins l'un des objectifs ci-dessus.
- fournir un procédé d'application d'un mortier/béton isolant satisfaisant à au moins l'un des objectifs ci-dessus.

**Brève description de l'invention**

Ces objectifs, parmi d'autres, sont atteints par la présente invention qui concerne, dans un premier de ses aspects, une composition de mortier sec, projetable en voie humide notamment à l'aide d'une pompe à vis, permettant la réalisation d'un mortier isolant caractérisée en ce que:

(i). elle comprend:

-A- au moins un liant caractérisé en ce qu'il comprend - en % en poids/poids sur sec et dans un ordre croissant de préférence -:

- -A1- liant primaire : [5 - 95] ; [10 - 85] ; [15 - 75] ;
  dont:
  - chaux : [10 - 95] ; [20 - 70] ; [30 - 60] ;
  - source d'alumine et/ou source de sulfate de calcium :
    [1 - 90] ; [5 - 30] ; [7 - 15] ;
- -A2- agent rétenteur d'eau : [0,1 - 5] ; [0,5 - 3] ; [0,8 - 2];
- -A3- surfactant : [0,01 - 1]; [0,05 - 0,5];
- -A4- liant secondaire [0 - 85] ; [5 - 50]; [7 - 15];
- -A5- charge minérale lubrifiante de granulométrie d90 inférieure à 100μm: [0 - 40] ; [0 - 30]; [0 - 20];
- -A6- charge minérale d'espacement de granulométrie d90 supérieure ou égale à 100μm : [0 - 40] ; [0 - 35]; [0 - 30];
- -A7- adjuvant hydrofuge : [0 - 1,5] ; [0 - 1]; [0 - 0,5];
- -A8- adjuvant retardateur de prise: [0 -3] ; [0 - 2]; [0 - 1];
- -A9- adjuvant accélérateur de prise: [0 - 3] ; [0 - 2]; [0 - 1];
- -A10- adjuvant épaississant: [0 - 2] ; [0,1 - 1]; [0,2- 0,8].;

-B- au moins une charge biosourcée d'origine végétale à base de tige de tournesol et/ou de tige de maïs et/ou de tige de colza présentant une Masse Volumique Apparente (MVA) en kg/m$^3$, inférieure à 110; de préférence comprise entre 10 et 80;
le ratio B/A -volume de charge B sèche en litres / masse de liant A sec en kg- étant compris entre -selon un ordre croissant de préférence- 2 et 9 ; 2,5 et 8 ; 4 et 7,9 ; 4,6 et 7,5 l/kg;

(ii).elle est destinée à être gâchée avec de l'eau, selon un rapport massique eau sur A compris entre 0,8 et 5, de préférence entre 1 et 4, et, plus préférentiellement encore entre 1,5 et 3,5;
(iii).une fois ainsi gâchée, elle est pompable dans une pompe à vis comme défini dans un test **T1**, défini ci-après.

Il est du mérite des inventeurs d'avoir mis au point cette composition sèche, précurseur d'une formulation humide susceptible d'être pompée et projetée, en particulier avec une pompe à vis du type de celle équipant, par exemple, les machines de projection des façadiers, et ce, sans perdre le caractère isolant recherché pour ces mortiers.
Outre la pompabilité de la formulation humide, la composition selon l'invention satisfait à une spécification de "projetabilité", c'est-à-dire, par exemple, que ladite formulation humide, dès lors qu'elle est projetée et appliquée, en une couche d'environ 5 cm, sur un support vertical en parpaings en béton, tient sur ce support vertical, sans fluage sans écoulement, pendant le temps nécessaire à son durcissement et à son adhésion sous forme durcie sur le dit support vertical, à une température ambiante comprise par exemple entre 5°C et 35°C et à une humidité relative HR comprise entre 20 et 90 pour cent.
De préférence, et toujours dans le souci d'améliorer son application par voie humide et sa pompabilité pendant un temps suffisant pour être compatible avec les exigences de la construction, cette composition est caractérisée, une fois gâchée avec de l'eau selon un rapport massique eau sur A compris entre 0,8 et 5, par un temps de prise, mesuré par une méthode **M1**, compris entre 1 et 24 heures, de préférence entre 1 et 8 heures.
Selon un autre de ses aspects, l'invention a trait à un liant (A) destiné notamment à la composition suivant l'invention, caractérisé en ce qu'il comprend - en % en poids/poids sur sec et dans un ordre croissant de préférence -:

- -A1- liant primaire : [5 - 95] ; [10 - 85] ; [15 - 75] ;
  dont:
    - ◦ chaux : [10 - 95] ; [20 - 70] ; [30 - 60] ;
    - ◦ source d'alumine et/ou source de sulfate de calcium : [1 - 90] ; [5 - 30] ; [7 - 15] ;
- -A2- agent rétenteur d'eau : [0,1 - 5] ; [0,5 - 3] ; [0,8 - 2];
- -A3- surfactant : [0,01 - 1]; [0,05 - 0,5];
- -A4- liant secondaire [0 - 85] ; [5 - 50]; [7 - 15];
- -A5- charge minérale lubrifiante de granulométrie d90 inférieure à 100μm: [0 - 40] ; [0 - 30]; [0 - 20];
- -A6- charge minérale d'espacement de granulométrie d90 supérieure ou égale à 100μm : [0 - 40] ; [0 - 35]; [0 - 30];
- -A7- adjuvant hydrofuge : [0 - 1,5] ; [0 - 1]; [0 - 0,5];
- -A8- adjuvant retardateur de prise: [0 -3] ; [0 - 2]; [0 - 1];
- -A9- adjuvant accélérateur de prise: [0 - 3] ; [0 - 2]; [0 - 1];
- -A10- adjuvant épaississant: [0 - 2] ; [0,1 - 1]; [0,2- 0,8].

Selon un autre de ses aspects, l'invention a pour objet un kit comprenant le liant (A) et une ou plusieurs charges (B) biosourcées, de préférence d'origine végétale de la composition sèche suivant l'invention.
Selon un autre de ses aspects, l'invention concerne une composition de mortier humide, obtenue, en particulier à partir de la composition selon l'invention, mélangée avec de l'eau selon un rapport massique eau sur A compris entre 0,8 et 5, de préférence entre 1 et 4, et, plus préférentiellement encore entre 1,5 et 3,5 pompable dans une pompe à vis avec un entrefer (E) entre rotor et stator compris entre 4 et 30 mm, et, de préférence, avec une jaquette type 2L6 ou 2R6.
Selon un autre de ses aspects, l'invention concerne un système d'Isolation Thermique Extérieure -ITE- ou d'Isolation Thermique Intérieure -ITI- caractérisé en ce qu'il comprend du mortier durci obtenu à partir de la composition humide selon l'invention et appliqué en couche(s) sur une épaisseur totale comprise entre 2 et 30 cm, de préférence entre 5 et 15 cm et recouvert par un enduit d'imperméabilisation d'une épaisseur de 10 mm minimum, et caractérisé en ce que le mortier durci comprend de la chaux et au moins une source d'alumine et en ce que ledit système satisfait au test selon la norme EOTA ETAG004 pour l'ITE.
Enfin, l'invention concerne également un procédé d'application d'un mortier isolant comprenant les étapes suivantes :

1° préparation d'un mélange d'eau et de la composition sèche telle que visée ci-dessus, c'est à dire comprenant le liant (A) et la charge biosourcée (B), dans un rapport massique eau/ liant (A) qui est indiqué ci-après, selon un gradient croissant de préférence:

- [Eau / A] ≥ 0,8; [Eau / A] ≥ 1,0; [Eau / A] ≥ 1,5 ;
- 0,8 ≤ [Eau / A] ≤ 5 ; 1 ≤ [Eau / A] ≤ 4 ; 1,5≤ [Eau / A] ≤ 3,5 ;

2° de préférence pompage du mélange préparé à l'étape 1, à l'aide d'une pompe à vis,

3.1° projection du mélange préparé à l'étape 1 sur un support vertical ou incliné, ou pour remplissage de structure en ossature bois ou métal sur site ou pour la réalisation de murs préfabriqués;
ou
3.2° projection et épandage sur un plan horizontal pour faire une chape; ou
3.3° coulage du mélange préparé à l'étape 1 dans un coffrage pour faire un mur, pour le remplissage entre deux parois, ou dans un moule pour faire un élément préfabriqué et en particulier des blocs ou des pré-murs ou des plaques.

*Description des figures*

- La figure 1 annexée montre un schéma simplifié d'une pompe à vis.
- La figure 2 annexée montre sur la photo de gauche une tige T de tournesol vue en section transversale, sur la photo centrale des particules d'écorce de tournesol et sur la photo de droite des particules de moelle de tournesol.
- La figure 3 montre à droite des particules de moelle de tournesol et à gauche des particules de moelle de maïs.
- La figure 4A annexée montre des particules d'écorce de colza.
- La figure 4B annexée montre des particules de moelle de colza.

*Définitions*

Dans tout le présent exposé, tout singulier désigne indifféremment un singulier ou un pluriel.
Les définitions données ci-après à titre d'exemples, peuvent servir à l'interprétation du présent exposé :

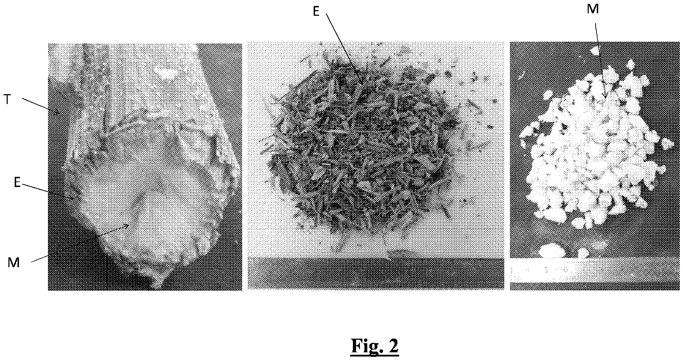

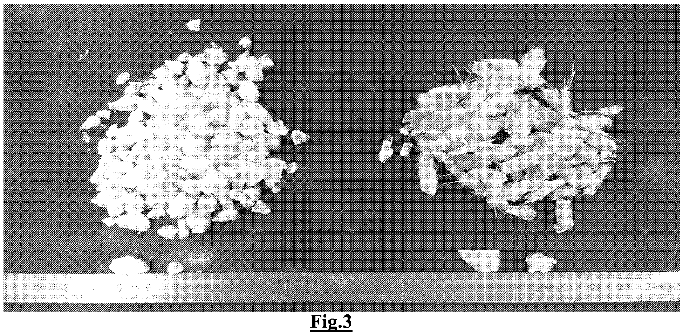

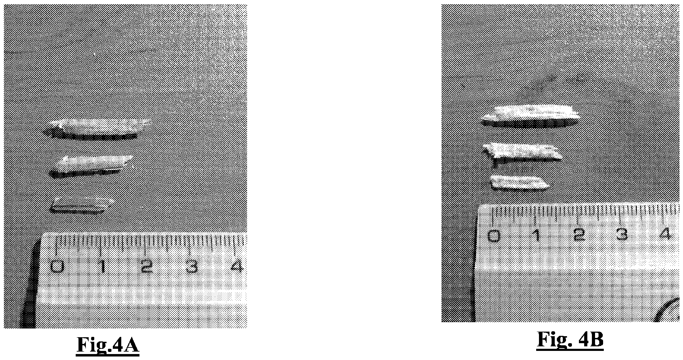

- *"mortier"* ou "béton" désigne indifféremment un mélange sec ou humide ou durci d'un ou plusieurs liants organiques et/ou minéraux, de charges d'origine minérale et/ou végétale et éventuellement de fillers et/ou d'additifs et/ou d'adjuvants ;
- Mortier *"isolant"* : désigne un mortier classé T "mortier pour enduit d'isolation thermique" suivant l'EN 998-1 ou un béton sous forme d'une couche dont la conductivité thermique $\lambda$, mesurée après *séchage complet* selon la méthode dite de la plaque chaude référence NF EN 12664, est inférieure ou égale à -en W/m.K et selon un ordre croissant de préférence- 0,2 ; 0,15 ; 0,12 ; 0,1 ; 0,08; 0,07;
- *"séchage complet"* signifie une stabilisation de la masse du mortier durci, à plus ou moins 3%, sur 24 heures, pour un stockage à 50% d'humidité relative;
- *"tige"* désigne la tige du végétal constituant la matière première des granulats biosourcés, cette tige est constituée par une écorce et un cœur formé par la moelle. La figure 2 annexée montre sur la photo de gauche une tige T de tournesol vue en section transversale. La partie périphérique plus foncée est l'écorce (E) et la partie centrale plus claire est la moelle (M).
- *"moelle"* de la *"tige"* : cœur de la tige de MVA inférieure à 60 kg/m$^3$.
- *"écorce"* de la *"tige"* : constituée par tout ce n'est pas moelle dans la tige, l'écorce a MVA > 110 kg/m3.
- *"particules de moelle"* : particules non aciculaires (grossièrement sphériques) ou aciculaires et ayant une MVA < 60 kg/m3. La photo de droite de la figure 2 montre des particules de moelle de tournesol. Les particules à gauche sur la photo de la figure 3 annexée sont des particules non aciculaires de moelle de tournesol. Les particules à droite sur la photo de la figure 3 annexée sont des particules non aciculaires de moelle de maïs. La figure 4B annexée montre des particules aciculaires de moelle de colza.
- *"particules d'écorce"* : particules aciculaires (bâtonnets) ayant une MVA > 110 kg/m3. La figure 2 annexée montre sur la photo centrale des particules d'écorce de tournesol. La figure 4A annexée des particules d'écorce de colza.
- *"particules de tige"* comprennent des particules d'écorce (bâtonnets) et des particules de moelle.
- *"granulométrie tout-passant":* 100% des granulats ont une taille inférieure au tamis.
- La *"taille"* des particules de la charge (B) biosourcée, correspond à la plus grande des trois dimensions de chaque particule;
- Une charge particulaire a une taille inférieure ou égale à X mm, si son d90 est inférieur ou égal à X mm; Le terme *"d90"* fait référence dans cet exposé au critère de granulométrie, selon lequel 90 % des particules ont une taille inférieure au *"d90"*. La granulométrie est mesurée par tamisage suivant la norme EN 12192-1;
- *"environ"* ou "sensiblement" signifie à plus ou moins 10 % près, voire plus ou moins 5% près, rapporté à l'unité de mesure utilisée;
- *"polymère"* désigne indifféremment *"homopolymère"* et *"copolymère"* et/ou mélange de polymères;
- *"charge légère"* est une charge dont la densité apparente est inférieure ou égale 750 kg/m$^3$, et de préférence inférieure à 500 kg/m$^3$;
- *"liquide":* eau ou dispersion aqueuse, émulsion aqueuse ou solution aqueuse;
- *"compris entre Z1 et Z2"* signifie que l'une et/ou l'autre des bornes Z1, Z2 est incluse ou non dans l'intervalle [Z1, Z2].
- La *"recouvrabilité"* est le temps minimum nécessaire avant l'application d'une nouvelle couche de formulation humide de mortier sur une précédente couche de cette formulation humide devenue dure. Ce temps minimum correspond à une résistance en compression de la précédente couche devenue dure, supérieure ou égale à 0,1 MPa.

**Description détaillée de l'invention**

*LIANT -A-*

Le liant -A- selon invention est plutôt minéral et comprend au moins un liant primaire A1 et éventuellement au moins un liant secondaire.

-A1- Liant primaire

Le liant primaire -A1- comprend de la chaux et/ou au moins une source d'alumine de calcium et/ou une source de sulfate de calcium.

Dans une variante remarquable de ce mode préféré de réalisation, le rapport massique sur sec [(source d'alumine) / (chaux)], est inférieur ou égal à - dans un ordre croissant de préférence - 2,3 ; 2,1 ; 1,9 ; 1,7 ; 1,5 ; 1,3 ; 1,1 ; 0,9.

La chaux est une chaux aérienne et/ou hydraulique. La chaux aérienne visée est du type de celles conformes à la norme NF EN 459-1, de préférence choisi dans le groupe comprenant-idéalement constitué de - :

- une chaux aérienne calcique (CL) contenant de l'oxyde de calcium (CaO) et/ou de l'hydroxyde de calcium (Ca(OH) 2) dont la somme CaO + MgO est d'au moins 70% et la teneur en MgO < 5% ;
- de la chaux dolomitique (DL) contenant de l'oxyde de calcium magnésium (CaO MgO) et/ou de l'hydroxyde de calcium magnésium (Ca(OH) 2Mg(OH) 2) dont la somme CaO + MgO est d'au moins 80%, et la teneur en MgO varie de 5% à plus de 30%>.
- ou leurs mélanges.

La chaux aérienne mise en œuvre peut se présenter sous diverses formes comme une pâte, une poudre ou, pour la chaux vive, la roche elle-même.

La chaux hydraulique visée est du type de celles conformes à la norme NF EN 459-1. Tout mélange de chaux de quelque type que ce soit, sous quelque forme que ce soit, peut contenir de la composition sur l'invention.

La source d'alumine est de préférence choisie parmi les espèces suivantes : les ciments à base d'aluminate de calcium (CAC), les ciments à base de sulfo-aluminate de calcium (CSA), les liants à haute teneur en phases cimentaires riches en alumine ou les mélanges de ces espèces prises isolément ou ensemble.

Selon une variante, la source d'alumine est choisie parmi les espèces suivantes : les ciments prompts (par exemple les ciments naturels prompts), les ciments géopolymères, les laitiers, les ciments à base d'aluminate de calcium (CAC), les ciments à base de sulfo-aluminate de calcium (CSA) ou les mélanges de ces espèces prises isolément ou ensemble.

Selon une autre variante, la source d'alumine est sélectionnée parmi les liants hydrauliques comprenant :

- ◦ au moins une phase choisie parmi $C_3A$, CA, $C_{12}A_7$, $C_{11}A_7CaF_2$, $C_4A_3\$$ (yée lemite), $C_2A_{(1-x)}F_x$ (avec C → CaO ; A → $Al_2O_3$; F → Fe2O3 et x appartenant à ]0, 1]),
- ◦ des phases amorphes hydrauliques présentant un ratio molaire C/A compris entre 0,3 et 15,
- ◦ et tels que les teneurs cumulées en $Al_2O_3$ de ces phases soient comprises entre
  - ▪ 3 et 70 % en poids du total du liant hydraulique,
  - ▪ préférentiellement entre 7 et 50% en poids,
  - ▪ et mieux entre 20 et 30% en poids.

Les CAC sont des ciments comprenant une phase minéralogique C4A3$, CA, C12A7, C3A ou C11A7CaF2 ou leurs mélanges, tel que par exemple les Ciments Fondu®, les ciments sulfoalumineux, les ciments d'aluminates de calcium conformes à la norme européenne NF EN 14647 de décembre 2006, le ciment obtenu à partir du clinker décrit dans la demande de brevet WO2006/018569 ou leurs mélanges.

Les clinkers sulfoalumineux sont obtenus à partir d'un mélange de carbonate de calcium sous forme calcaire, de bauxite ou d'une autre source d'alumine (par exemple sous-produit de type dross) et de sulfate de calcium, qui est soit du gypse, de l'anhydrite ou de l'hémihydrate ou des mélanges. Le constituant spécifique à l'issue du processus de fabrication est la Yeelimite, C4A3$. On peut utiliser en particulier des ciments Prompt ou ciments sulfoalumineux qui contiennent des teneurs en Yeelimite comprise entre 3% et 70% qui peuvent être commercialisés par Vicat, Italcementi, Lafarge-Holcim, Polar Bear, Liu Jiu, Readerfast.

Par exemple, un ciment naturel prompt est constitué d'un clinker contenant

- de 0% à 35% de C3S ;
- de 10% à 60% de C 2S ;
- de 1% à 12% de C 4AF ;
- de 1% à 10% de C 3A ;
- de 5% à 50% de CaC0 3(calcite) ;
- de 10% à 15% de Ca 5(Si0 4) 2C0 3(spurrite) ;
- de 3 à 10%) de phases sulfates : yee'limite (C 4A 3$), Langbeinite (K 2Mg 2(S0 4) 3, anhydrite (C$) ; et
- de 10 à 20%) de chaux, de périclase, de quartz et/ou d'une ou plusieurs phases amorphes.

Selon une autre variante, la source d'alumine est sélectionnée parmi les liants hydrauliques comprenant une teneur en alumine (exprimée en Al2O3) comprise dans les intervalles suivants -en % en poids sur sec et dans un ordre croissant de préférence- [20 ; 70] ; [25 ; 65] ; [30 ; 72] ; [35 ; 58].

Avantageusement, la source de sulfate de calcium est choisie parmi les anhydrites, les gypses, les semi-hydrates de calcium, les ciments supersulfatés et leurs mélanges. La source de sulfate de calcium, naturelle ou de synthèse, est choisie parmi les anhydrites, les gypses, les semi-hydrates de calcium ou les mélanges de ces espèces prises isolément ou ensemble.

-A2- Agent rétenteur d'eau

De préférence, le rétenteur d'eau -A2- est doté d'une rétention d'eau supérieure ou égale à -selon un ordre croissant de préférence- 50, 60 , 70 , 80 , 90 % , suivant la méthode de mesure de la rétention **M2,** ce rétenteur d'eau étant de préférence choisi parmi les polysaccharides, et, plus préférentiellement encore dans le groupe comprenant -ou mieux encore constitué par- les éthers de cellulose ou d'amidon et leurs mélanges; les méthylcelluloses, les hydroxyéthylcelluloses, les hydroxypropylcelluloses, les méthylhydroxypropylcelluloses, les méthylhydroxyéthylcelluloses et leurs mélanges; les éthers de guar modifiés ou non et leurs mélanges; ou le mélange de ces différentes espèces.
L'agent rétenteur d'eau A2 a de préférence une viscosité à 2% dans l'eau, mesuré au viscosimètre HAAKE rotovisco RV100, shear rate de 2,55 $s^{-1}$ à 20°C comprise entre 5000 et 70000 cp, préférentiellement entre 20000 et 50000.
Le rétenteur d'eau A2 a la propriété de conserver l'eau de gâchage avant la prise. L'eau est ainsi maintenue dans la pâte de mortier ou béton, ce qui lui confère une très bonne adhérence et une bonne hydratation. Dans une certaine mesure, elle est moins absorbée sur le support, le relargage en surface est limité et on a ainsi peu d'évaporation.

-A3- Surfactant

Les surfactants sont de préférence choisis parmi :

i. les sources de surfactants anioniques de type par exemple, alkyl sulfates, alkyl éther sulfates, alkaryl sulfonates, les alkylsuccinates, alkylsulpho succinates, alkoyl sarcosinates, alkyl phosphates, alkylether phosphates, alkylether carboxylates, et alpha oléfine sulfonates, préférentiellement le lauryl sulfate de sodium,
ii. Les surfactants non ioniques de type alcools gras ethoxylés, mono ou di alkyl alkanolamides, les alkyl polyglucosides,
iii. Les surfactants amphotériques de type alkyl amine oxides, alkyl betaines, alkyl amido propylbétaïne, alkylsulphobétaïnes, alkylglycinates, alkyl amphopropionates, alkyl amidopropylhydroxysultaïnes.
iv. les polyols de polyéther, les molécules hydrocarbonées, les molécules siliconés, esters hydrophobes,
v. les tensioactifs non ioniques,
vi. les polyoxiranes,
vii. ou leurs mélanges ;

A titre de tensioactifs ioniques, on peut citer de façon non limitative les alkyléthersulfonates, les hydroxyalkyléthersulfonates, les alphaoléfinesulfonates, les alkylbenzènesulfonates, les alkylesters sulfonates, les alkyléthersulfates, les hydroxyalkylethersulfates, les alphaoléfinesulfates, les alkylbenzènesulfates, les alkylamides sulfates, ainsi que leurs dérivés alcoxylés (notamment éthoxylés (0E) et/ou propoxylés (OP)), les sels correspondants ou leurs mélanges. A titre de tensioactifs ioniques, on peut également citer de façon non limitative les sels d'acides gras saturés ou insaturés et/ou leurs dérivés alcoxylés notamment (0E) et/ou (OP) (comme par exemple le laurate de sodium, le palmitate de sodium ou le stéarate de sodium, l'oléate de sodium), les lauréates de méthyle et/ou de sodium alpha sulfonés, les alkylglycérol sulfonates, les acides polycarboxyliques sulfonés, les sulfonates de paraffine, les N-acyl N-alkyltaurates, les alkylphosphates, les alkylsuccinamates, les alkylsulfosuccinates, les monoesters ou diesters de sulfosuccinates, les sulfates d'alkylglucosides. PA12011 FR A titre de tensioactifs non ioniques, on peut citer de façon non limitative les alcools gras éthoxylés, les alkylphénols alcoxylés (notamment (0E) et/ou (OP)), les alcools aliphatiques plus particulièrement en 08-022, les produits résultant de la condensation de l'oxyde d'éthylène ou de l'oxyde de propylène avec le propylène glycol ou l'éthylène glycol, les produits résultant de la condensation de l'oxyde d'éthylène ou de l'oxyde de propylène avec l'éthylène diamine, les amides d'acides gras alcoxylés (notamment (0E) et/ou (OP)), les amines alcoxylés (notamment (0E) et/ou (OP)), les amidoamines alcoxylés (notamment (0E) et/ou (OP)), les oxydes d'amines, les hydrocarbures terpéniques alcoxylés (notamment (0E) et/ou (OP)), les alkylpolyglucosides, les polymères ou oligomères amphiphiles, les alcools éthoxylés, les esters de sorbitan ou les esters de sorbitan éthoxylés. A titre de tensioactifs amphotères, on peut citer de façon non limitative les bétaïnes, les dérivés de l'imidazoline, les polypeptides ou les lipoaminoacides. Plus particulièrement, les bétaïnes convenant selon l'invention peuvent être choisies parmi la cocamidopropyl bétaïne, la bétaïne dodécylique, la bétaïne hexadécylique, la bétaïne octadécylique, les phospholipides et leurs dérivés, les esters d'acides aminés, les protéines hydrosolubles, les esters de protéines hydrosolubles et leurs mélanges. A titre de tensioactifs cationiques, on peut également citer de façon non limitative l'oxide d'amino-laurate, l'oxide d'amino propyl cocoate, le caprylamphocarboxy glycinate, le lauryl propionate, le lauryl de bétaïne, le talloil bis 2-hydroxyethyl de bétaïne. Selon un mode de réalisation particulier de l'invention, l'agent moussant non ionique peut être associé à au moins un agent moussant anionique ou cationique ou amphotère.

A titre de tensioactifs amphiphiles, on peut citer de façon non limitative les polymères, oligomères ou copolymères au moins miscibles en phase aqueuse. Les polymères ou oligomères amphiphiles peuvent avoir une répartition statistique ou une répartition multibloc. Les polymères ou oligomères amphiphiles utilisés selon l'invention sont choisis parmi les polymères à blocs comprenant au moins un bloc hydrophile et au moins un bloc hydrophobe, le bloc hydrophile étant obtenu à partir d'au moins un monomère non ionique et/ou anionique. A titre d'exemple de tels polymères ou oligomères amphiphiles, on peut citer notamment les polysaccharides ayant des groupements hydrophobes, notamment des groupements alkyle, le polyéthylène glycol et ses dérivés. PA12011 FR A titre d'exemple de polymères ou oligomères amphiphiles, on peut également citer les polymères triblocs polyhydroxystéarate - polyéthylène glycol - polyhydroxystéarate, les polymères acryliques ramifiés ou non, ou les polymères polyacrylamides hydrophobes.

Pour ce qui a trait aux polymères amphiphiles non ioniques plus particulièrement alcoxylés (notamment (OE) et/ou (OP)), ces derniers sont plus particulièrement choisis parmi les polymères dont au moins une partie (au moins 50 % en masse) est miscible dans l'eau. A titre d'exemples de polymères de ce type, on peut citer entre autres les polymères triblocs polyéthylène glycol / polypropylène glycol / polyéthylène glycol. De préférence, l'agent moussant utilisé selon l'invention est une protéine, en particulier une protéine d'origine animale, plus particulièrement la kératine, ou une protéine d'origine végétale, plus particulièrement une protéine hydrosoluble de blé, de riz, de soja ou de céréales. A titre d'exemple, on peut citer le sodium laurate d'hydrolysat de protéine de blé, le laurate d'hydrolysat de protéine d'Oat, ou le sodium cocoate d'acides aminés de pomme. De préférence, l'agent moussant utilisé selon l'invention est une protéine dont le poids moléculaire est compris de 300 à 50 000 Daltons. L'agent moussant est utilisé selon l'invention à une teneur de 0,001 à 2 (:)/0, de préférence de 0,01 à 1 (:)/0, plus préférentiellement de 0,005 à 0,2 en masse d'agent moussant par rapport à la masse du liant.

-A4- Liant secondaire

Dans un mode préféré de réalisation de l'invention, la composition comprend au moins un liant secondaire -A4-, différent du liant -A1-, et choisi parmi les ciments portland, les ciments naturels prompts, et les laitiers, les ciments géopolymères, les pouzzolanes naturelles, les silicates de sodium, les silicates de potassium, les silicates de lithium, les liants organiques ou leurs mélanges.
Par exemple, un ciment artificiel Portland convenant à titre de liant secondaire A4, comprend

- de 20% à 95 % d'un clinker contenant :
  - de 50% à 80% de C 3S ;
  - de 4% à 40% de C 2S ;
  - de 0% à 20% de C 4AF ; et
  - de 0% à 2% de C 3A ;
- de 0% à 4% de $ ;
- de 0%) à 80%) de laitier de haut fourneau, de fumée de silice, de pouzzolanes et/ou de cendres volantes.

Selon une variante, A4 est un liant organique choisi dans le groupe comprenant - idéalement constitué par- : les poudres polymères redispersables, les (co)polymères époxy, les (co)polyuréthanes, et leurs mélanges.

Suivant une caractéristique remarquable de l'invention, la composition comprend en outre:

- -A5- une charge minérale lubrifiante de granulométrie d90 inférieure à 100μm;
- -A6- une charge minérale d'espacement de granulométrie d90 supérieure ou égale à 100μm;
- et, éventuellement un ou plusieurs adjuvants.

-A5- charge minérale lubrifiante

La charge minérale lubrifiante de granulométrie d90 inférieure à 100μm, est de préférence choisie

- parmi les minéraux silicatés naturels et synthétiques et, plus préférentiellement encore parmi les argiles, les micas, les kaolins et les métakaolins, les fumées de silice, les cendres volantes et leurs mélanges,

- parmi les fillers calcaires, ou silico-calcaires
- parmi les cendres volantes,
- ou parmi leurs mélanges.

-A6- charge minérale d'espacement

La charge minérale d'espacement de granulométrie d90 supérieure ou égale à 100μm, est de préférence choisie parmi les sables siliceux, calcaires ou silico-calcaires, les charges légères, lesquelles étant plus particulièrement choisies parmi la vermiculite expansée ou non, la perlite expansée ou non, les billes de verre expansées ou non [billes de verre creuses (type 3M®) ou granulés de verre expansés (Poraver®, Liaver®)], les aérogels de silice, le polystyrène expansé ou non, les cénosphères (fillites), les billes creuses d'alumine, les argiles expansées ou non, les ponces,, les grains de mousse de silicate, la rhyolithe (Noblite®), ou leurs mélanges.

-A7- adjuvant hydrofuge

L'hydrofugeant est de préférence choisi dans le groupe comprenant ou mieux encore constitué par les agents fluorés, silanisés, siliconés, siloxanés, les sels métalliques d'acides gras et leurs mélanges, de préférence parmi les sels de sodium, potassium et/ou magnésium des acides oléique et/ou stéarique et leurs mélanges.

-A8- adjuvant retardateur de prise

Le retardateur de prise est de préférence choisi dans le groupe comprenant ou mieux encore constitué par les agents chélatants du calcium, les acides carboxyliques et leurs sel, les polysaccharides et leurs dérivés, les phosphonates, les lignosulphonates, les phosphates, les borates, et les sels de plomb, zinc, cuivre, arsenic et antimoine, et plus particulièrement parmi l'acide tartrique et ses sels, de préférence ses sels de sodium ou de potassium, l'acide citrique et ses sels, de préférence son sel de sodium (citrate trisodique), les gluconates de sodium; les phosphonates de sodium ; les sulfates et leurs sels de sodium ou de potassium, et leurs mélanges.

-A9- adjuvant accélérateur de prise:

L'accélérateur de prise est de préférence choisi dans le groupe comprenant ou mieux encore constitué par les sels alcalins et alcalino-terreux d'hydroxydes, d'halogénures, de nitrates, de nitrites, de carbonates, de thiocyanates, de sulfates, de thiosulfates, de perchlorates, de silice, d'aluminium, et/ou parmi les acides carboxyliques et hydrocarboxyliques et leurs sels, les alcanolamines, les composés insolubles silicatés tels les fumées de silices, cendres volantes ou pouzzolanes naturelles, les ammonium quaternaires silicatés, les composés minéraux finement divisés tels les gels de silice ou les carbonates de calcium et/ou de magnésium finement divisés, et leurs mélanges; cet accélérateur de prise complémentaire (e) étant de préférence choisi dans le groupe comprenant ou mieux encore constitué par parmi les chlorures et leurs sels de sodium ou calcium ; les carbonates et leurs sels de sodium ou lithium, les sulfates et leurs sels de sodium ou de potassium, les hydroxydes et formiates de calcium et leurs mélanges;

-A10- adjuvant épaississant:

A10 est un adjuvant différent de A2 permettent d'améliorer le seuil d'écoulement du mortier (tenue en charge).
De préférence, cet adjuvant épaississant est choisi dans le groupe comprenant ou mieux encore constitué par les polysaccharides et leurs dérivés, les alcools polyvinyliques, les épaississants minéraux, les polyacrylamides linéaires et leurs mélanges.

-Compositions de liant A:

Dans un mode de réalisation, la composition selon l'invention est caractérisée en ce que le liant A comprend - en % en poids/poids sur sec et dans un ordre croissant de préférence -:

- -A1- liant primaire : [5 - 95] ; [10 - 85] ; [15 - 75] ;
  dont:

    o chaux : [10 - 95] ; [20 - 70] ; [30 - 60] ;
    o source d'alumine et/ou source de sulfate de calcium :
    [0 - 90] ; [5 - 30] ; [7 - 15] ;

- -A2- agent rétenteur d'eau : [0,1 - 5] ; [0,5 - 3] ; [0,8 - 2];
- -A3- surfactant [0 - 2] ; [0,01 - 1]; [0,05 - 0,5];
- -A4- liant secondaire [0 - 85] ; [5 - 50]; [7 - 15];
- -A5- charge minérale lubrifiante de granulométrie d90 inférieure à 100μm: [0 - 40] ; [0 - 30]; [0 - 20];
- -A6- charge minérale d'espacement de granulométrie d90 supérieure ou égale à 100μm : [0 - 40] ; [0 - 35]; [0 - 30];
- -A7- adjuvant hydrofuge : [0 - 1,5] ; [0 - 1]; [0 - 0,5];
- -A8- adjuvant retardateur de prise: [0 -3] ; [0 - 2]; [0 - 1];
- -A9- adjuvant accélérateur de prise: [0 - 3] ; [0 - 2]; [0 - 1];
- -A10- adjuvant épaississant: [0 - 2] ; [0,1 - 1]; [0,2- 0,8].

Dans un autre mode de réalisation, la composition selon l'invention est caractérisée en ce que le liant A comprend - en % en poids/poids sur sec et dans un ordre croissant de préférence -:

- -A1- liant primaire : [5 - 95] ; [10 - 85] ; [15 - 75] ;
  dont:
  - chaux : [10 - 95] ; [20 - 70] ; [30 - 60] ;
  - source d'alumine et/ou source de sulfate de calcium :
    [1 - 90] ; [5 - 30] ; [7 - 15] ;
- -A2- agent rétenteur d'eau : [0,1 - 5] ; [0,5 - 3] ; [0,8 - 2];
- -A3- surfactant : [0,01 - 1]; [0,05 - 0,5];
- -A4- liant secondaire [0 - 85] ; [5 - 50]; [7 - 15];
- -A5- charge minérale lubrifiante de granulométrie d90 inférieure à 100μm: [0 - 40] ; [0 - 30]; [0 - 20];
- -A6- charge minérale d'espacement de granulométrie d90 supérieure ou égale à 100μm : [0 - 40] ; [0 - 35]; [0 - 30];
- -A7- adjuvant hydrofuge : [0 - 1,5] ; [0 - 1]; [0 - 0,5];
- -A8- adjuvant retardateur de prise: [0 -3] ; [0 - 2]; [0 - 1];
- -A9- adjuvant accélérateur de prise: [0 - 3] ; [0 - 2]; [0 - 1];
- -A10- adjuvant épaississant: [0 - 2] ; [0,1 - 1]; [0,2- 0,8].

*-B- CHARGE BIOSOURCEE*

Cette charge biosourcée végétale typique des compositions suivant l'invention est à base de tige de tournesol et/ou de tige de maïs et/ou de tige de colza présentant une Masse Volumique Apparente (MVA) en kg/m$^3$, inférieure à 110; de préférence comprise entre 10 et 80.

Plus précisément, cette charge -B- comprend des particules de tiges de tournesol et/ou de tiges de maïs et/ou de tiges de colza.

Selon une caractéristique préférée de l'invention, la charge biosourcée B est constituée de particules de tiges qui présentent une granulométrie tout-passant dans la plus grande dimension desdites particules (en mm et dans un ordre croissant de préférence) ≤ 15 ; ≤ 14 ; ≤ 13 ; ≤ 12 ; ≤ 11.

Suivant un mode préféré de réalisation de l'invention, le pourcentage de moelle de tige dans la charge biosourcée B est (en % en poids sur sec et dans un ordre croissant de préférence) > 15 ; ≥ 20 ; ≥ 30 ; ≥ 40 ; ≥ 50 ≥ 60 ; ≥ 70 ; ≥ 80 ; ≥ 90 ; ≥ 95 ; ≥ 99.

Conformément à une caractéristique préférée de l'invention, les particules de tiges de la charge (B) sont majoritairement constituées par des particules de moelle. Mieux encore, le pourcentage $P^{moelle}$ en poids sur sec des particules de moelle par rapport à la masse totale des particules de tiges, se définit comme suit dans un ordre croissant de préférence: $P^{moelle}$ > 15 ; ≥ 20 ; ≥ 30 ; ≥ 40 ; ≥ 50.

Ces particules sont par exemple sous forme de fibres, fibrilles, poussières, poudre, copeaux, poils et/ou anas.

Les tiges de tournesol, de maïs ou de colza, comprennent chacune une écorce entourant la moelle.

Cette moelle est une matière première végétale qui s'est avérée adaptée à la composition selon l'invention. Cette moelle est obtenue par séparation de l'écorce de la tige de maïs, de tournesol, ou de colza, après broyage de ces tiges. Ces plantes sont cultivées pour leur qualité nutritive (huile, graines, etc.). Une fois effectuée la récolte des capitules ou des épis, les tiges ou la paille sont laissées sur le champ et elles ne sont pas valorisées. Au mieux elles sont enfouies dans le sol au quel elles confèrent un faible apport nutritionnel. Il a été observé en particulier, que la tige de tournesol, de maïs ou de colza, composée d'écorce (partie extérieure) et moelle (partie intérieure), a un faible apport nutritionnel, et que cet apport est dû essentiellement aux substances protéiques présentes dans l'écorce. A la différence de l'écorce, la moelle de tournesol, de maïs ou de colza est caractérisée par une structure très alvéolaire qui lui confère une très faible densité (30-35 kg/m$^3$). Pour l'invention, en collaboration avec certaines coopératives agricoles, les tiges de maïs ou de colza ont été récoltées et broyées par ensilage directement sur le champ. Ensuite, à travers un procédé de séparation à l'aide d'une table densimétrique, il a été possible de séparer l'écorce de la moelle. La moelle a été ensuite ré-broyée à travers un broyeur à couteaux afin d'obtenir la granulométrie souhaitée (environ 5 à 15 mm). Comme présenté dans l'exemple 2 ci-après, un mortier isolant à base de charge -B-issue de la moelle de tournesol peut être pompé à l'aide d'une pompe à vis de type façadier, ayant une jaquette classique type 2L6 ou 2R6. Le même type de procédé peut être appliqué aux tiges de maïs ou de colza (paille de colza).

Les particules de charge (B) peuvent avoir des formes variées, aciculaires ou non aciculaires, préférablement non aciculaires.

PRODUITS INTERMEDIAIRES

L'invention a également pour objet à titre de nouveau produit un liant -A- pour matériaux de construction en partie biosourcé, ce liant étant destiné notamment à la composition suivant l'invention.

De préférence, ce liant A suivant l'invention, comprend - en % en poids/poids sur sec et dans un ordre croissant de préférence-:

- -A1- liant primaire : [5 - 95] ; [10 - 85] ; [15 - 75] ;
  dont:
  - chaux : [10 - 95] ; [20 - 70] ; [30 - 60] ;
  - source d'alumine et/ou source de sulfate de calcium :
    [1 - 90] ; [5 - 30] ; [7 - 15] ;
- -A2- agent rétenteur d'eau : [0,1 - 5] ; [0,5 - 3] ; [0,8 - 2];
- -A3- surfactant : [0,01 - 1]; [0,05 - 0,5];
- -A4- liant secondaire [0 - 85] ; [5 - 50]; [7 - 15];
- -A5- charge minérale lubrifiante de granulométrie d90 inférieure à 100$\mu$m: [0 - 40] ; [0 - 30]; [0 - 20];
- -A6- charge minérale d'espacement de granulométrie d90 supérieure ou égale à 100$\mu$m : [0 - 40] ; [0 - 35]; [0 - 30];
- -A7- adjuvant hydrofuge : [0 - 1,5] ; [0 - 1]; [0 - 0,5];
- -A8- adjuvant retardateur de prise: [0 -3] ; [0 - 2]; [0 - 1];
- -A9- adjuvant accélérateur de prise: [0 - 3] ; [0 - 2]; [0 - 1];
- -A10- adjuvant épaississant: [0 - 2] ; [0,1 - 1]; [0,2- 0,8].

L'invention vise également à titre de nouveau produit, un kit comprenant le liant -A-susvisé et la charge végétale -B- tel que définie ci-dessus.

COMPOSITION HUMIDE

Selon un autre de ses aspects, l'invention concerne une composition de construction humide formée par un mélange de la composition sèche selon l'invention, mélangée à de l'eau.

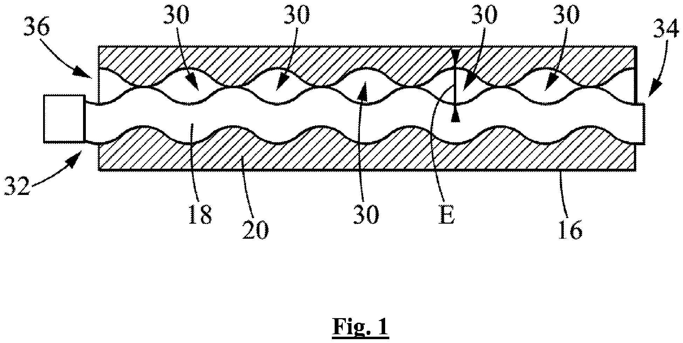

Conformément à une caractéristique remarquable de l'invention cette composition humide est pompable dans une pompe à vis avec un entrefer (E) entre rotor (20) et stator (18) compris entre 4 et 30 mm. Les références renvoient à la figure 1 annexée.
Un tel entrefer correspond de préférence à une jaquette du commerce de type 2L6 ou 2R6.

PROCEDE DE PREPARATION DE CETTE COMPOSITION HUMIDE

La présente invention a également pour objet un procédé de préparation de la composition humide telle que définie ci-dessus. Ce procédé consiste à mélanger de l'eau à la composition de construction sèche telle que définie ci-dessus, avantageusement selon un rapport massique eau sur A compris entre 0,8 et 5, de préférence entre 1 et 4, et, plus préférentiellement encore entre 1,5 et 3,5..

Ce mélange peut se faire par tout dispositif conventionnel approprié et connu de l'homme de l'art.

Il peut s'agir d'un malaxeur planétaire ou à axe fixe (verticale ou horizontale) ou d'une bétonnière. Le dispositif mélangeur peut ou pas être installé directement sur la machine comportant la pompe à vis et permettant l'application par projection ou coulage de la composition humide.

MACHINE DE POMPAGE ET DE PROJECTION DE LA COMPOSITION HUMIDE DE CONSTRUCTION SUSVISEE

Les machines ici considérées sont des "pompes à vis", de préférence:

· du type de celles utilisées pour la projection des enduits de façade (telles que Lancy PHB-R, Bunker S8 Smart, Urban Volta, Spritz S28R, Spritz S38, Turbosol UNI30, Putzmeister SP11, S5 ou SP5);
· ou les pompes à béton (type Bunker B100).

La demande de brevet WO97/45461A1 décrit un exemple de ce type de "pompe à vis". Cette dernière comprend généralement une chambre de succion et un port de décharge disposés respectivement aux extrémités d'un stator, à l'intérieur duquel est disposé un rotor hélicoïdal à simple hélice destiné à coopérer avec un stator à double hélice. Le stator est de préférence constitué par un matériau élastomère, tandis que le rotor 18 est avantageusement métallique. Ce dernier est mobile en rotation autour de son axe par l'intermédiaire de moyens d'entraînement et de transmission appropriés. Les brevets US N°2512764 et N°2612845 sont des exemples parmi d'autres, de sources d'informations sur la structure détaillée de ces pompes à vis.

La figure 1 annexée montre un schéma simplifié d'une pompe à vis comprenant un tube de stator 16, un stator 20 traversé par un alésage 36 dans lequel est mobile en rotation un rotor 18. Ce tube stator 16/stator 20 présente une extrémité de succion 32 et une extrémité de décharge ou port de décharge 34. Dès lors que le rotor 18 tourne à l'intérieur de l'alésage 36 du stator 20, des cavités 30 sont formées entre le rotor 18 et le stator 20. Ces cavités 30 progressent depuis l'extrémité de succion 32 jusqu'à l'extrémité ou port de décharge 34. Les cavités 30 ont une longueur définie par le pas de l'hélice du rotor 18 et par une hauteur maximale ou entrefer E montré sur la figure 1. Cet entrefer E peut par exemple varier entre 1 et 50 mm, de préférence 4 à 30 mm.

Cet ensemble tube de stator 16/ stator 20 / rotor 18 est également dénommée jaquette. Les jaquettes/stators couramment montées sur les machines à projeter les enduits de façade sont, par exemple, de type "2L6" ou 2R6 ou de type 2R8 (compatible avec la pompe à béton Bunker B100).

PROCEDE D'APPLICATION DE CETTE COMPOSITION HUMIDE

La présente invention a également pour objet un procédé d'application de la composition humide telle que définie ci-dessus (étapes 1° ; 2° ; et 3° {3.1° ; 3.2° ou 3.3°}):
De préférence, l'application du mortier humide se fait par projection à l'aide d'une machine de projection dite "de façadier" comportant pompe à vis.

- Pour une charge -B- biosourcée de taille inférieure à 10 mm, la machine de projection est avantageusement une machine de type S5, SP5, SP11 de Putzmeister, S8, S28R, S38 de Bunker, PH9B ou PH9B-Rde Lancy, ou Talent DMR de Turbosol, cette machine comprenant une pompe à vis équipée d'un rotor-stator de type 2L6 ou 2R6.
- Pour une charge -B- biosourcée de taille supérieure ou égale à 10mm et inférieure à 30mm, la machine de projection est avantageusement une machine de type B100 et CL18 de Bunker, SP20 de Putzmeister, TB20 de Lancy ou Silant 300 CL de Turbosol, cette machine comprenant une pompe à vis équipée d'un rotor-stator de type 2L8 ou 2R8.

*1° Préparation d'un mélange d'eau et de la composition sèche selon l'invention.*

Le malaxage du mortier est réalisé dans la cuve de la machine lorsque cette dernière en possède une ou en bétonnière suivant le descriptif suivant, préférentiellement :

**-a-** malaxage de 100 l de la charge -B- biosourcée avec l'eau de gâchage (totalité de l'eau diminuée de 21 environ) pendant 1 min au moins.
**-b-** Introduction de la totalité du liant puis malaxage pendant 5 mn environ avec ajustement de la viscosité par ajout éventuel d'eau. La viscosité obtenue du mortier doit permettre un bon écoulement dans la cuve de pompage (mortier se plaçant sous son propre poids à l'horizontal) tout en maintenant un seuil permettant une tenue en charge de 5 cm.
**-c-** Transfert de la gâchée dans la cuve de la pompe à vis.

2° *Pompage du mélange préparé à l'étape 1, à l'aide d'une pompe à vis*

Les machines de projection dite "de façadier" comportent généralement un tuyau de pompage de la formulation humide de mortier, en amont de la pompe à vis et en aval de celle-ci un tuyau de projection dont l'extrémité libre est équipée d'une lance de projection.

Préférentiellement, avant la mise en route de la pompe à vis, une barbotine du liant (e.g. entre 1 à 50 kg, environ 10 Kg) est préférablement introduite dans le tuyau de pompage afin de "graisser" et "lubrifier" ledit tuyau.

Le réglage de la pompe à vis est avantageusement réalisé au préalable à l'eau pour une pression par exemple de 1 à 20 bars : 5 bars environ pour une jaquette 2L6 ou de 1 à 20 bars : 3 bars environ pour une jaquette 2L8.

Pour une jaquette 2L6 ou 2 R6, le tuyau de projection comporte par exemple une première partie de section intérieure de e.g. 15 à 50 mm : 35mm sur une longueur de e.g. 5 à 30 m : 13 m environ, et une seconde partie de section intérieure de e.g. 15 à 50 mm : 25 mm et de longueur de e.g. 1 à 10 m : 5m.

Pour une jaquette 2L8 ou 2R8, le tuyau de projection a par exemple une section intérieure de 50mm sur une longueur de 10m.

*3° Projection du mélange préparé à l'étape 1*

Pour la projection, la lance de projection est avantageusement alimentée en air comprimé.

MORTIERS DURCIS

L'invention concerne les mortiers durcis obtenus à partir de la composition humide susvisée. Ces mortiers durcis ont avantageusement une conductivité thermique $\lambda$ lambda inférieure ou égale à -en W/m.K et selon un ordre croissant de préférence- 0,15 ; 0,12 ; 0,1 ; 0,08; 0,07.

SYSTEMES ITE / ITI

L'invention concerne un système d'Isolation Thermique Extérieure -ITE- ou d'Isolation Thermique Intérieure -ITI- comprenant du mortier durci tel que visé ci-dessus et appliqué en couche(s) sur une épaisseur totale comprise entre 2 et 30 cm, de préférence entre 5 et 15 cm et recouvert par un enduit d'imperméabilisation d'une épaisseur de 10 mm minimum. Ce système est caractérisé en ce que le mortier durci comprend de la chaux et au moins une source d'alumine et en ce qu'il satisfait au test selon la norme EOTA ETAG004 dans le cadre d'un ITE.

L'enduit d'imperméabilisation est avantageusement conforme à la NF EN 998-1. Il est de préférence choisi parmi les OC1. Il est par exemple appliqué après un minimum de 24h suivant l'application de la dernière passe de mortier isolant biosourcé.

OUVRAGES DE BATIMENT OU DE GENIE CIVIL

L'invention concerne aussi des ouvrages de bâtiment obtenus après application par projection ou par moulage ou par assemblage effectué sur site, d'objets préfabriqués à partir de la composition selon l'invention.

D'autres détails et caractéristiques avantageuses de l'invention ressortiront ci-après de la description d'exemples de réalisation de l'invention.

**EXEMPLES**

**TEST DE POMPABILITE T1 :**

Le test **T1** consiste à réaliser un essai de passage d'une formulation humide obtenue à partir de la composition de mortier à tester, dans une machine de projection de façadier équipée d'une pompe à vis.

- Pour une charge biosourcée de taille inférieure ou égale à 10 mm, on mise en œuvre une pompe à vis équipée d'un rotor-stator de type 2L6 montée sur une machine de type SP11 de Putzmeister,
- Pour une charge biosourcée de taille supérieure à 10mm et inférieure à 30mm, on met en œuvre une pompe à vis équipée d'un rotor-stator 2L8 montée sur une machine B100 de Bunker, avec un malaxeur intégré.

Le malaxage du mortier est réalisé dans la cuve de la machine comme suit:

1. Malaxage de 100 l de charge -B- biosourcée avec la quasi-totalité de l'eau de gâchage pendant 1 min, sachant que eau sur A est compris entre 0,8 et 5.
2. Introduction de la totalité du liant -A- puis malaxage pendant 5 min avec ajustement de la viscosité par ajout éventuel d'une petite quantité d'eau, de manière à ce que la viscosité du mortier obtenu permette son écoulement dans la cuve de pompage de la pompe à vis, et ce en moins d'une minute.
3. Transfert de la gâchée dans la cuve de la pompe à vis.
4. Réglage préalable de la pompe à vis par serrage, en faisant passer de l'eau dans la jaquette, pour obtenir en sortie de jaquette une pression de 5 bars environ pour une jaquette 2L6 ou 3 bars environ pour une jaquette 2L8.
5. Pompage de la gâchée présente dans la cuve de la pompe à vis.

La composition à tester est considérée comme étant pompable, en l'absence de blocage de la pompe à vis, c'est-à-dire un constat de non expulsion de formulation humide de mortier en sortie de la pompe à vis ou en cas de constat de séparation de phase entre la charge -B-biosourcée et la phase liante, en sortie de la pompe à vis.

Par "non expulsion", on entend une sortie de formulation humide pendant au moins 30 minutes, dans une quantité inférieure à un litre.

Par "séparation de phase", on entend la séparation entre le liquide interstitiel et la phase granulaire du mortier. Le bouchonnage ou bourrage de la pompe est une conséquence de la séparation entre la phase liquide et le réseau granulaire lors du passage du produit dans un espace confiné. Cette séparation de phase va entraîner l'apparition de contact direct entre granulats (notamment les particules de charge -B-), d'où le blocage

Ce test est réalisé à température et en atmosphère ambiante.

**Méthode de mesure M1 DONNANT LE TEMPS DE "DURCISSEMENT" D'UN MORTIER BIO-SOURCE ET PERMETTANT D'ESTIMER LE DELAI DE RECOUVRABILITE**

Le délai de recouvrabilité est lié à durcissement du mortier bio-sourcé. Le temps de durcissement correspond à une acquisition de résistance en compression (NF EN 1015-11) supérieure ou égale à 0,1 MPa, permettant le démoulage d'une maquette 4x4x16 cm.

***Protocole :***

1. Le produit est gâché à l'aide d'un malaxeur planétaire à axe vertical spécifié par la norme NF EN 196-1.

   a) La charge végétale B est malaxée avec la quasi-totalité de l'eau de gâchage pendant 1 min, à une vitesse de 120 tours/min, sachant que eau sur A est compris entre 0,8 et 5.
   b) Le liant est ajouté puis malaxé pendant 300 s à vitesse de 120 tours/min. La viscosité est ajustée par ajout éventuel d'une petite quantité d'eau, de manière à ce que le mortier gâché puisse s'écouler dans un moule de l'étape 2 en moins de 30 s.

2. Après gâchage le mortier est moulé dans des moules métalliques de format 4x4x16 cm.
3. Les éprouvettes sont ensuite stockées à 20°C et 50% HR.
4. Le temps de "durcissement" correspond au moment où la cohésion de l'éprouvette permet son démoulage sans endommagement.

Par "endommagement", on entend fissure et/ou rupture partielle ou totale de l'éprouvette.

**Méthode M2 de MESURE DU TEMPS DE RETENTION D'EAU D'UN MORTIER BIO-SOURCE**

Cette méthode **M2** correspond à une adaptation de la méthode dite du filtre.

***Appareillage*** *:*

- Moule métallique.

  *Dimensions intérieures :*
  *Diamètre haut : 100 + 5 mm.*
  *Diamètre du fond : 80 +/- 5 mm.*
  *Hauteur: 25 + 1 mm.*
  *Dimensions extérieures :*
  *Diamètre: 120 +/- 5 mm.*
  *Hauteur: 30 + 1 mm.*

- Spatule
- Carreau de faïence (dimension : environ 120 mm x 5 mm)
- Balance de précision 0,01 g
- Papier filtre de 100 mm. de diamètre (type Schleicher ou le filtre-Lab 0965 NW 25 L) : filtre de séparation.

(i). Papier filtre de 100 mm. de diamètre (Schleicher 2294 ou le filtre-Lab S-Type 600)

***Protocole** :*

1. L'échantillon est préparé selon le mode de malaxage décrit dans le test T2.
2. Peser le moule vide et sec → $m_A$
3. Peser le papier filtre Schleicher 2294 ou le filtre-Lab S-Type 600) → $m_B$
4. Remplir le moule avec le mortier bio-sourcés à l'aide d'une spatule, dépasser légèrement pour assurer un contact du filtre et de la pâte.
5. Peser le moule rempli → $m_C$
6. Couvrir la pâte avec le papier filtre de séparation (type Schleicher ou le filtre-Lab 0965 NW 25 L) et ensuite placer le filtre 2294 ou S-600 sur l'ensemble
7. Placer le carreau de faïence sur l'ensemble et retourner le tout, démarrer le chronomètre, le temps d'essai est de 15 minutes,
8. Après 15 minutes, récupérer le papier filtre 2294 ou S-600 et le peser → $m_D$

***Expression des résultats :***

Calcul 1: masse d'eau contenue dans le produit

$$M_{eau} = ((m_C - m_A) * Tg\%)/ (100 + Tg\%)$$

Calcul 2: perte d'eau du produit

$$\Delta_{eau} = (m_D - m_B)$$

Calcul 3: Rétention d'eau en %

$$R\% = ((M_{eau} - \Delta_{eau})/ M_{eau})*100$$

*EN 1015-8 : Methods of test for mortar masonry - Part 8 : Determination of water retentivity of fresh mortar. (September 1999)*

**-MATIERES PREMIERES**

**LIANT A**

A1 :

CHAUX HYDRAULIQUE HL 3,5 LAFARGE.
CIMENT SULFOALUMINEUX, I.TECH ALICEM, ITALCEMENTI ;

A2:
CULMINAL C8367, AGENT RETENTEUR D'EAU, METHYLHYDROXYETHYLCELLULOSE, VISCOSITE 32000-40000 M.PA.S , ASHLAND AQUALON ;
A3:
NANSA LSS 495/H , SURFACTANT, SODIUM ALPHA OLEFIN SULFONATE, HUNTSMAN ;
A5:
FUMEE DE SILICE, RW SILICIUM GMBH ;
A6:

- PORAVER, GRANULAT DE VERRE EXPANSE, TAILLE GRANULAIRE EN MM 01-03, PORAVER GMBH ;
- SABLE SILICEUX, DU 0,1 / 0,4 SIBELCO FRANCE

A7 :
OPTIGEL WM, BÉNTONITE ORGANIQUEMENT MODIFIÉE, ROCKWOOD ADDITIVES.

**CHARGE -B-** :

Charge formée par 95% de moelle végétale obtenue par broyage de tiges de tournesol et trié à l'aide de tables densimétriques (tamis) et tamiseur vibrant. Les particules ont une taille comprise entre 2 mm et 15 mm.

Les photographies de la figure 2 annexée montrent une tige de tournesol avant broyage (photo de gauche), et après broyage et séparation: écorce (photo du centre) et moelle (photo de droite) de tournesol.

Des particules de moelle tournesol après broyage et séparation sont également présentées sur la photographie de gauche de la figure 3 annexée.

**EXEMPLE 1 COMPARATIF** : Formule suivant l'art antérieur (exemple Tradical® PF70).

Le Tradical PF70 de la société Balthazard et Cotte Batiment (groupe Lhoist) comprend majoritairement environ 75% de chaux hydraulique, 15% de liant hydraulique et 10% de pouzzolanique.

Les conclusions de l'essai suivant le test **T1** sont:

- Blocage de la machine à cause d'une séparation des phases. La rétention suivant T3 est inférieure à 90%;
- Temps de durcissement supérieur à 48h mesuré suivant T2.

| EXEMPLE COMPARATIF | | 1 |
|---|---|---|
| Machine de projection | | BUNKER B100 |
| Jaquette associée | | **2L8** |
| Descriptif formule | | Art antérieur TRADICAL PF70 |
| Matrice liante [kg] | | 33 |
| **B. Charge** labélisée « chènevotte pour le bâtiment » KANABAT: Volume [L]<br>Massique [kg] | | <br>100<br>10 |
| Ratio volume/poids Charge B/ Liant A [L/kg] | | 3,03 |
| Ratio poids/poids Charge B/ Liant A [kg/kg] | | 0,3 |
| Eau [L] | | 42 |
| Ratio massique Eau / Liant A | | 1,27 |
| Composition matrice liante | | |
| **A Liant** | TRADICAL PF70 *(BCB)* | 100% |
| Commentaires d'application | | |
| Passage machine / pompage test **T1** | | Blocage pompe / séparation des phases |
| Propriétés état durci | | |
| Densité [kg/m$^3$] | | - |

(suite)

| EXEMPLE COMPARATIF | 1 |
| --- | --- |
| Conductivité thermique [W/mK] | - |

**EXEMPLE 2**

Cet exemple 2 de mortier isolant à très faible lambda <0,1 W/mK, met en œuvre une charge -B- biosourcée constituée de particules de forme arrondie de moelle de tournesol. Ce mortier humide peut être projeté avec une pompe à vis excentrée classiquement utilisé pour la projection d'enduit de façade (jaquette type 2L6 ou 2R6).

| Formules | | |
| --- | --- | --- |
| Machine de projection | | PUTZMEISTER SP11 |
| Jaquette associée | | 2L6 |
| Matrice liante [kg] | | 6,75 |
| B. Charge formée de particules de moelle de tournesol :<br>volume [L]<br>Massique [kg] | | <br>45<br>1,5 |
| Ratio volume/poids Charge B/ Liant A [L/kg] | | 6,66 |
| Ratio poids/poids Charge B / Liant A [kg/kg] | | 0,22 |
| Eau [L] | | 22 |
| Ratio massique Eau / Liant A | | 3,25 |
| Composition matrice liante A | | |
| A.1 Liant minéral primaire | Chaux Hydraulique HL 3,5 *(Lafarge)* | 58,78% |
| | Ciment Sulfoalumineux I.Tech ALICEM *(Italcementi)* | 10% |
| A.2 Rétenteur d'eau | MHEC CULMINALC8367 *(Ashland)* | 1,13% |
| A.3 Surfactant | NANSA LSS 495/H (*Huntsman*) | 0,09% |
| A6. Charge minérale d'espacement | Sable Siliceux DU 01-04 | 20% |
| A5. Charge minérale lubrifiante | FUMEE DE SILICE | 10% |
| Commentaires d'application | | |
| Passage machine / pompage T1 | | Passage machine correct |
| Propriétés état durci | | |
| Densité [kg/m$^3$] | | 232 |
| Conductivité thermique [W / mK] : mesure réalisée à la plaque chaude. | | 0,06 |

**Revendications**

1. Liant -A-, **caractérisé en ce qu'**il comprend - en % en poids/poids sur sec et dans un ordre croissant de préférence -:

   - -A1- liant primaire : [5 - 95] ; [10 - 85] ; [15 - 75] ;
   dont:

     - chaux : [10 - 95] ; [20 - 70] ; [30 - 60] ;
     - source d'alumine et/ou source de sulfate de calcium :

[1 - 90] ; [5 - 30] ; [7 - 15] ;

- -A2- agent rétenteur d'eau : [0,1 - 5] ; [0,5 - 3] ; [0,8 - 2];
- -A3- surfactant : [0,01 - 1]; [0,05 - 0,5];
- -A4- liant secondaire [0 - 85] ; [5 - 50]; [7 - 15];
- -A5- charge minérale lubrifiante de granulométrie d90 inférieure à 100$\mu$m: [0 - 40] ; [0 - 30]; [0 - 20];
- -A6- charge minérale d'espacement de granulométrie d90 supérieure ou égale à 100$\mu$m : [0 - 40] ; [0 - 35]; [0 - 30];
- -A7- adjuvant hydrofuge : [0 - 1,5] ; [0 - 1]; [0 - 0,5];
- -A8- adjuvant retardateur de prise: [0 -3] ; [0 - 2]; [0 - 1];
- -A9- adjuvant accélérateur de prise: [0 - 3] ; [0 - 2]; [0 - 1];
- -A10- adjuvant épaississant: [0 - 2] ; [0,1 - 1]; [0,2- 0,8].

**2.** Composition de mortier sec, projetable en voie humide notamment à l'aide d'une pompe à vis, permettant la réalisation d'un mortier isolant **caractérisée en ce que**:

(i.) elle comprend:

au moins un liant -A- selon la revendication 1,
au moins une charge biosourcée -B-, à base de tige de tournesol et/ou de tige de maïs et/ou de tige de colza présentant une Masse Volumique Apparente (MVA) en kg/m$^3$, inférieure à 110; de préférence comprise entre 10 et 80;
le ratio B/A -volume de charge B sèche en litres / masse de liant A sec en kg- étant compris entre -selon un ordre croissant de préférence- 2 et 9 ; 2,5 et 8 ; 4 et 7,9 ; 4,6 et 7,5 l/kg.;

(ii.) elle est destinée à être gâchée avec de l'eau, selon un rapport massique eau sur A compris entre 0,8 et 5, de préférence entre 1 et 4, et, plus préférentiellement encore entre 1,5 et 3,5;
(iii.) une fois ainsi gâchée, elle est pompable dans une pompe à vis comme défini dans un test **T1** comme décrit dans la section examples.

**3.** Composition selon la revendication 2 **caractérisée en ce que** le rétenteur d'eau -A2- est doté d'une rétention d'eau supérieure ou égale à -selon un ordre croissant de préférence- 50, 60 , 70 , 80 , 90 % , suivant la méthode de rétention **M2** comme décrit dans la section examples, ce rétenteur d'eau étant de préférence choisi parmi les polysaccharides, et, plus préférentiellement encore dans le groupe comprenant -ou mieux encore constitué par- les éthers de cellulose ou d'amidon et leurs mélanges; les méthylcelluloses, les hydroxypropylcelluloses, les hydroxyéthylcelluloses, les méthylhydroxy-propylcelluloses, les méthylhydroxyéthylcelluloses et leurs mélanges; les éthers de guar modifiés ou non et leurs mélanges; ou le mélange de ces différentes espèces.

**4.** Composition selon l'une au moins des revendications 2 ou 3 **caractérisée en ce qu'**elle comprend au moins un liant secondaire -A4-, différent du liant -A1-, choisi parmi les ciments portland, les ciments naturels prompts, les laitiers, les ciments géopolymères, les pouzzolanes naturelles , les silicates de sodium, les silicates de potassium, les silicates de lithium, les liants organiques ou leurs mélanges.

**5.** Composition selon l'une au moins des revendications 2 à 4 **caractérisée en ce que** le charge biosourcée -B- comprend des particules de moelle de tournesol, et/ou de maïs et/ou de colza.

**6.** Kit comprenant le liant -A- et la charge végétale -B- tels que définis dans la revendication 2.

**7.** Composition humide obtenue à partir de la composition selon l'une au moins des revendications 2 à 5, mélangée avec de l'eau selon un rapport massique eau sur A compris entre 0,8 et 5, de préférence entre 1 et 4, et, plus préférentiellement encore entre 1,5 et 3,5, **caractérisée en ce qu'**elle est pompable dans une machine dotée de pompe à vis avec un entrefer (E) entre rotor (20) et stator (18) compris entre 4 et 30 mm.

**8.** Système d'Isolation Thermique Extérieure -ITE- ou d'Isolation Thermique Intérieure -ITI-**caractérisé en ce qu'**il comprend du mortier durci obtenu à partir de la composition humide selon la revendication 7 et appliqué en couche(s) sur une épaisseur totale comprise entre 2 et 30 cm, de préférence entre 5 et 15 cm et recouvert par un enduit d'imperméabilisation d'une épaisseur de 10 mm minimum et **caractérisé en ce que** le mortier durci comprend de la chaux et au moins une source d'alumine et **en ce que** ledit système satisfait au test selon la norme EOTA ETAG004 pour l'ITE.

**9.** Procédé d'application d'un mortier isolant comprenant les étapes suivantes :

1° préparation d'un mélange d'eau et de la composition sèche selon l'une au moins des revendications 2 à 5, c'est à dire comprenant le liant -A- et la charge d'origine végétale -B-, dans un rapport massique eau / liant -A- qui est indiqué ci-après, selon un gradient croissant de préférence:

- [Eau / A] ≥ 0,8; [Eau / A] ≥ 1,0; [Eau / A] ≥ 1,5 ;
- 0,8 ≤ [Eau / A] ≤ 5 ; 1 ≤ [Eau / A] ≤ 4 ; 1, 5 ≤ [Eau / A] ≤ 3,5 ;

2° de préférence pompage du mélange préparé à l'étape 1, à l'aide d'une pompe à vis;
3.1° projection du mélange préparé à l'étape 1

→ sur un support vertical ou incliné,
→ aux fins de remplissage de structure en ossature bois ou métal sur site,
→ ou aux fins de réalisation de murs préfabriqués;

ou
3.2° projection et épandage sur un plan horizontal pour faire une chape;
ou
3.3° coulage du mélange préparé à l'étape 1 dans un coffrage pour faire un mur, pour le remplissage entre deux parois, ou dans un moule pour faire un élément préfabriqué et en particulier des blocs ou des pré-murs ou des plaques.

**Patentansprüche**

**1.** Bindemittel -A-, **dadurch gekennzeichnet, dass** es - in Gew.-%/Trockengewicht und in ansteigender Bevorzugungsreihenfolge - umfasst:

- -A1- primäres Bindemittel: [5-95]; [10-85]; [15-75] ;

davon:

  - ◦ Kalk: [10-95]; [20 bis 70]; [30 bis 60];
  - ◦ Aluminiumoxidquelle und/oder Calciumsulfatquelle: [1-90]; [5-30]; [7-15];

- -A2- Wasserrückhaltemittel: [0,1-5]; [0,5-3]; [0,8-2];
- -A3-Tensid: [0,01-1]; [0,05-0,5];
- -A4- sekundäres Bindemittel [0-85]; [5-50]; [7-15];
- -A5- schmierender mineralischer Füllstoff mit einer Teilchengröße d90 unter 100 µm: [0-40]; [0-30]; [0 - 20];
- -A6- mineralischer Beabstandungsfüllstoff mit einer Teilchengröße d90 größer oder gleich 100 µm: [0-40]; [0-35]; [0 - 30];
- -A7- wasserabweisender Zusatzstoff: [0-1,5]; [0-1]; [0-0,5];
- -A8- Abbindeverzögerer: [0-3]; [0-2]; [0-1];
- -A9- Abbindebeschleuniger: [0-3]; [0-2]; [0-1];
- -A10- Verdickungsmittel: [0-2]; [0,1-1]; [0,2-0,8].

**2.** Trockenmörtelzusammensetzung, die auf nassem Weg insbesondere mit Hilfe einer Schneckenpumpe spritzbar ist, die die Herstellung eines Isoliermörtels ermöglicht, **dadurch gekennzeichnet, dass**:

(i.) sie
mindestens ein Bindemittel -A- nach Anspruch 1,
mindestens einen biobasierten Füllstoff -B- auf Sonnenblumenstängel- und/oder Maisstängel- und/oder Rapsstängel-Basis mit einer Schüttdichte (SD) in kg/m$^3$ unter 110, vorzugsweise zwischen 10 und 80;
wobei das Verhältnis B/A - Volumen von trockenem Füllstoff B in Liter/Masse von trockenem Bindemittel A in kg zwischen - in ansteigender Bevorzugungsreihenfolge - 2 und 9; 2,5 und 8; 4 und 7,9; 4,6 und 7,5 l/kg liegt;
umfasst;

(ii.) sie dazu bestimmt ist, mit Wasser in einem Massenverhältnis von Wasser zu A zwischen 0,8 und 5, vorzugsweise zwischen 1 und 4 und noch weiter bevorzugt zwischen 1,5 und 3,5 angemacht zu werden;
(iii.) sie dann, wenn sie angemacht ist, in einer Schneckenpumpe, wie in einem wie im Beispielteil beschriebenen Test **T1** definiert, gepumpt werden kann.

**3.** Zusammensetzung nach Anspruch 2, **dadurch gekennzeichnet, dass** das Wasserrückhaltemittel -A2- eine Wasserrückhaltung größer oder gleich - in ansteigender Bevorzugungsreihenfolge -50, 60, 70, 80, 90 % gemäß der wie in den Beispielen beschriebenen Rückhaltemethode **M2** aufweist, wobei dieses Wasserrückhaltemittel vorzugsweise aus den Polysacchariden und weiter bevorzugt aus der Gruppe, die Cellulose- oder Stärkeether und Mischungen davon; Methylcellulosen, Hydroxypropylcellulosen, Hydroxyethylcellulosen Methylhydroxypropylcellulosen, Methylhydroxyethylcellulosen und Mischungen davon; modifizierte und unmodifizierte Guarether und Mischungen davon oder Mischungen dieser verschiedenen Gattungen umfasst oder noch besser daraus besteht, ausgewählt ist.

**4.** Zusammensetzung nach mindestens einem der Ansprüche 2 oder 3, **dadurch gekennzeichnet, dass** sie mindestens ein von dem Bindemittel -A1- verschiedenes sekundäres Bindemittel -A4- umfasst, das aus Portlandzementen, schnell aushärtenden Naturzementen, Schlacken, Geopolymerzementen, natürlichen Puzzolanen, Natriumsilikaten, Kaliumsilikaten, Lithiumsilikaten, organischen Bindemitteln oder Mischungen davon ausgewählt ist.

**5.** Zusammensetzung nach mindestens einem der Ansprüche 2 bis 4, **dadurch gekennzeichnet, dass** der biobasierte Füllstoff -B- Sonnenblumen- und/oder Mais- und/oder Rapsmarkpartikel umfasst.

**6.** Kit, umfassend das Bindemittel -A- und den pflanzlichen Füllstoff -B- gemäß Anspruch 2.

**7.** Nasszusammensetzung, erhalten aus der Zusammensetzung nach mindestens einem der Ansprüche 2 bis 5, gemischt mit Wasser in einem Massenverhältnis von Wasser zu A zwischen 0,8 und 5, vorzugsweise zwischen 1 und 4 und noch weiter bevorzugt zwischen 1,5 und 3,5, **dadurch gekennzeichnet, dass** sie in einer Maschine mit einer Schneckenpumpe mit einem Luftspalt (E) zwischen Rotor (20) und Stator (18) zwischen 4 und 30 mm gepumpt werden kann.

**8.** Außenwärmedämmsystem oder Innenwärmedämmsystem, **dadurch gekennzeichnet, dass** es den aus der Nasszusammensetzung nach Anspruch 7 erhaltenen ausgehärteten Mörtel, der in einer oder mehreren Schichten bis zu einer Gesamtdicke zwischen 2 und 30 cm, vorzugsweise zwischen 5 und 15 cm, aufgetragen und mit einem Abdichtputz mit einer Dicke von mindestens 10 mm bedeckt wird, umfasst, und **dadurch gekennzeichnet, dass** der ausgehärtete Mörtel Kalk und mindestens eine Aluminiumoxidquelle umfasst und dass das System dem Test gemäß der Norm EOTA ETAG004 für das Außenwärmedämmsystem entspricht.

**9.** Verfahren zur Anwendung eines Isoliermörtels, umfassend die folgenden Schritte:

1° Herstellung einer Mischung von Wasser und der Trockenzusammensetzung nach mindestens einem der Ansprüche 2 bis 5, d. h. umfassend das Bindemittel -A- und den Füllstoff pflanzlichen Ursprungs -B-, in einem Massenverhältnis Wasser/Bindemittel -A, das nachstehend in ansteigender Bevorzugungsreihenfolge angegeben ist:

· Wasser/A] $\geq$ 0,8; [Wasser/A] $\geq$ 1,0; [Wasser/A] $\geq$1,5;
· 0,8 $\leq$ [Wasser/A] $\leq$ 5; 1 $\leq$ [Wasser/A] $\leq$ 4; 1,5 $\leq$ [Wasser/A] $\leq$ 3,5;

2° vorzugsweise Pumpen der in Schritt 1 hergestellten Mischung mit Hilfe einer Schneckenpumpe;
3.1° Aufspritzen der in Schritt 1 hergestellten Mischung

→ auf einen vertikalen oder geneigten Träger,
→ zum Füllen einer Holz- oder Metallrahmenkonstruktion vor Ort,
→ oder zur Herstellung von vorgefertigten Mauern; oder

3.2° Aufspritzen und Ausbreiten auf einer horizontalen Ebene zur Herstellung eines Estrichs;
oder
3.3° Gießen der in Schritt 1 hergestellten Mischung in eine Schalung zur Herstellung einer Mauer, zum Füllen zwischen zwei Wände oder in eine Form zur Herstellung eines vorgefertigten Elements und insbesondere von Blöcken oder vorgefertigten Mauern oder Platten.

## Claims

1. Binder -A-, **characterized in that** it comprises, as a weight/weight percentage based on dry matter and in an order of increasing preference:

    - -A1- primary binder: [5 - 95] ; [10 - 85] ; [15 - 75] ; of which:
        - lime: [10 - 95]; [20 - 70]; [30 - 60];
        - source of alumina and/or source of calcium sulfate: [1 - 90]; [5 - 30]; [7 - 15] ;
    - -A2- water retention agent: [0.1 - 5]; [0.5 - 3]; [0.8 - 2];
    - -A3- surfactant: [0.01 - 1]; [0.05 - 0.5];
    - -A4- secondary binder [0 - 85]; [5 - 50]; [7 - 15];
    - -A5- inorganic lubricating filler with a particle size d90 of less than 100 μm: [0 - 40]; [0 - 30]; [0 - 20];
    - -A6- inorganic space filler with a particle size d90 of greater than or equal to 100 μm: [0 - 40]; [0 - 35]; [0 - 30];
    - -A7- water-repellent adjuvant: [0 - 1.5]; [0 - 1]; [0 - 0.5];
    - -A8- setting retardant adjuvant: [0 - 3]; [0 - 21; [0 - 1];
    - -A9- setting accelerator adjuvant: [0 - 3]; [0 - 21; [0 - 1];
    - -A10- thickening adjuvant: [0 - 2]; [0.1 - 1]; [0.2 - 0.8].

2. Dry mortar composition that can be wet sprayed, notably by means of a screw pump, for producing an insulating mortar, **characterized in that**:

    (i) it comprises:

    at least one binder -A- according to Claim 1;
    at least one biobased filler -B- based on sunflower stalk and/or corn stalk and/or rapeseed stalk, having a Bulk Density (BD) in kg/$m^3$of less than 110, preferably between 10 and 80;
    the ratio B/A - volume of dry filler B in litres/mass of dry binder A in kg - being between - in increasing order of preference - 2 and 9; 2.5 and 8; 4 and 7.9; 4.6 and 7.5 l/kg;

    (ii) it is intended to be mixed with water, in a mass ratio of water to A of between 0.8 and 5, preferably between 1 and 4, and even more preferentially between 1.5 and 3.5;
    (iii) once mixed in this manner, it is pumpable in a screw pump as defined in a test **T1** as described in the examples section.

3. Composition according to Claim 2, **characterized in that** the water retention agent -A2- has a water retention of greater than or equal to - in increasing order of preference - 50%, 60%, 70%, 80%, 90%, according to the retention method **M2** as described in the examples section, this water retention agent preferably being chosen from polysaccharides, and even more preferentially from the group comprising - or better still consisting of - ethers of cellulose or of starch and mixtures thereof; methylcelluloses, hydroxypropylcelluloses, hydroxyethylcelluloses, methylhydroxypropylcelluloses, methylhydroxyethylcelluloses, and mixtures thereof; modified or unmodified guar ethers and mixtures thereof; or a mixture of these various species.

4. Composition according to at least one of Claims 2 or 3, **characterized in that** it comprises at least one secondary binder -A4-, different from binder -A1-, chosen from Portland cements, quick-setting natural cements, slags, geopolymer cements, natural pozzolans, sodium silicates, potassium silicates, lithium silicates, organic binders, or mixtures thereof.

5. Composition according to at least one of Claims 2 to 4, **characterized in that** the biobased filler -B-comprises sunflower and/or corn and/or rapeseed pith particles.

6. Kit comprising the binder -A- and the plant-based filler -B- as defined in Claim 2.

7. Wet composition obtained from the composition according to at least one of Claims 2 to 5, mixed with water in a mass ratio of water to A of between 0.8 and 5, preferably between 1 and 4 and even more preferentially between 1.5 and 3.5, **characterized in that** it is pumpable in a machine equipped with a screw pump having an air gap (E) between the rotor (20) and the stator (18) of between 4 and 30 mm.

**8.** System of External Thermal Insulation - ETI - or Internal Thermal Insulation - ITI - **characterized in that** it comprises hardened mortar obtained from the wet composition according to Claim 7 and applied in layer(s) to a total thickness of between 2 and 30 cm, preferably between 5 and 15 cm, and covered with a waterproofing coating with a thickness of at least 10 mm, **characterized in that** the hardened mortar comprises lime and at least one source of alumina and **in that** said system satisfies the test according to the EOTA ETAG 004 standard for ETI.

**9.** Process for applying an insulating mortar, comprising the following steps:

1° preparing a mixture of water and of the dry composition according to at least one of Claims 2 to 5, i.e. comprising the binder -A- and the filler of plant origin -B-, in a mass ratio of water/binder -A- which is indicated below, in a gradient of increasing order of preference:

· Water/A] $\geq$ 0.8; [Water/A] $\geq$ 1.0; [Water/A] $\geq$ 1.5;
· 0.8 $\leq$ [Water/A] $\leq$ 5; 1 $\leq$ [Water/A] $\leq$ 4; 1.5 $\leq$ [Water/A] $\leq$ 3.5;

2° preferably pumping the mixture prepared in step 1, by means of a screw pump;
3.1° spraying the mixture prepared in step 1

→ onto a vertical or inclined substrate,
→ for the purpose of filling a wooden or metal framework structure on site,
→ or for the purpose of making prefabricated walls; or

3.2° spraying and spreading on a horizontal plane to create a screed;
or
3.3° pouring the mixture prepared in step 1 into a formwork to make a wall, to fill between two walls, or into a mould to make a prefabricated member and in particular blocks or precast wall members or panels.

36
30
30
30
30
34
32
18
20
30
E
16

**Fig. 1**

T
E
M
E
M

**Fig. 2**

Fig.3

0
1
2
3
4

**Fig.4A**

0
1
2
3
4

**Fig. 4B**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- WO 03004435 A
- WO 03004435 A1
- WO 2014001712 A1
- FR 2997944 A1
- EP 3031868 A
- WO 2006018569 A
- WO 9745461 A1
- US 2512764 A
- US 2612845 A